# EUROPEAN PATENT APPLICATION

(11) **EP 4 361 758 A1**
(43) Date of publication of application: **01.05.2024**
(21) Application number: 22849709.5
(22) Date of filing: 09.06.2022
(51) Int. Cl.: G06F 1/16, G09F 9/30

(54) **ELECTRONIC DEVICE INCLUDING WINDOW MEMBER**

(30) Priority: 29.07.2021 KR 20210099615
(71) Applicant: Samsung Electronics Co., Ltd., Suwon-si, Gyeonggi-do 16677 (KR)
(72) Inventor: BAE, Jaehyun, Suwon-si Gyeonggi-do 16677 (KR); LEE, Changsu, Suwon-si Gyeonggi-do 16677 (KR); CHOI, Hyunsuk, Suwon-si Gyeonggi-do 16677 (KR)
(74) Representative: Appleyard Lees IP LLP
(86) International application number: PCT/KR2022/008147
(87) International publication number: WO 2023/008730

(57) **Abstract**

An electronic device according to various embodiments of the present invention comprises: a deformable display; and a window member disposed on the display and comprising at least one deformable region that is deformed at least in part along the deformable display, wherein the deformation region comprises at least one main deformation region and at least one sub-deformation region, the window member comprises: a first hardness member including at least one of a plurality of sub-openings disposed in the sub-deformation region and at least one of a plurality of main openings disposed in the main deformation region; a filling member filled in at least one of the plurality of sub-openings and the plurality of main openings; and a second hardness member disposed on at least one of a first surface and a second surface of the first hardness member and having a lower hardness than the first hardness member, and at least one of the plurality of main openings may have a greater width than at least one of the plurality of sub-openings. Various other embodiments identified through the specification are possible.

## Description

### [Technical Field]

Embodiments of the disclosure described herein relate to an electronic device including a window member.

### [Background Art]

Recently, displays have become important devices among electronics. Electronic devices equipped with the displays are gradually made compact. In contrast, user demands for large screens are increasing. Accordingly, studies on flexible displays that can be rolled inside electronic devices or can be folded are increasingly conducted.

### [Disclosure]

### [Technical Problem]

A flexible display may be formed by attaching a window made of a transparent material to a display panel. The window applied to the flexible display may be formed to be thin in order to secure folding performance of the flexible display. In the case of the thin window, it is difficult to secure strength performance. When a separate coating or film is applied to the window to secure the strength performance, the folding performance may be deteriorated.

Various embodiments of the disclosure provide a window member capable of simultaneously securing strength performance and folding performance and an electronic device including the same.

### [Technical Solution]

An electronic device according to an embodiment of the disclosure includes a deformable display and a window member that is disposed on the display and that includes at least one deformation region at least partially deformed depending on the deformable display. The deformation region includes at least one main deformation region and at least one sub-deformation region. The window member includes a first hardness member including at least one of a plurality of sub-openings disposed in the sub-deformation region or a plurality of main openings disposed in the main deformation region, a filling member that fills at least one of the plurality of sub-openings or the plurality of main openings, and a second hardness member that is disposed on at least one of a first surface or a second surface of the first hardness member and that has a lower hardness than the first hardness member. At least one of the plurality of main openings has a greater width than at least one of the plurality of sub-openings.

### [Advantageous Effects]

The window member of the electronic device according to the embodiments of the disclosure may include the high-hardness member disposed on the glass member, thereby securing the strength of the electronic device. Accordingly, dent and scratch defects caused by a fingernail and an accessory, a damage defect such as cracks caused by external impact, and a bright-spot defect of the display may be prevented when the electronic device is used.

The window member of the electronic device according to the embodiments of the disclosure may include the filling member that fills the plurality of openings of the high-hardness member. Accordingly, the electronic device may absorb and alleviate external impact, and deformation (e.g., folding, sliding, or rolling) performance of the electronic device may be secured.

In addition, the disclosure may provide various effects that are directly or indirectly recognized.

### [Description of Drawings]

FIG. 1 is a view illustrating a flat state of an electronic device according to various embodiments of the disclosure.
FIG. 2 is a view illustrating a folded state of the electronic device of FIG. 1 according to various embodiments of the disclosure.
FIG. 3 is an exploded perspective view of the electronic device according to various embodiments of the disclosure.
FIG. 4 is a view illustrating an electronic device including a window member and a display according to various embodiments.
FIG. 5 is a view taken along line "I-I'" in FIG. 4.
FIG. 6A is a plan view illustrating a partial region of a high-hardness member according to various embodiments, and FIG. 6B is a sectional view of a partial region of the high-hardness member taken along line "II-II"' in FIG. 6A.
FIG. 7A is a view illustrating a partial region of a foldable electronic device of an out-folding type according to various embodiments, and FIG. 7B is a view illustrating a partial region of a foldable electronic device of an in-folding type according to various embodiments.
FIGS. 8A and 8B are sectional views illustrating a partial region of a foldable electronic device of an out-folding type according to various embodiments.
FIGS. 9A and 9B are sectional views illustrating a partial region of a foldable electronic device of an in-folding type according to various embodiments.
FIG. 10 is a view illustrating one example of a partial region of a foldable electronic device including a glass member having a concave-convex shape according to various embodiments.
FIG. 11 is a view illustrating another example of the partial region of the foldable electronic device including the glass member having the concave-convex shape according to various embodiments.
FIG. 12 is a view illustrating an electronic device including a window member and a stylus pen according to various embodiments.
FIG. 13 is a view illustrating a folded state of a multi-foldable electronic device according to various embodiments.
FIG. 14 is a view illustrating a flat state of the multi-foldable electronic device according to various embodiments.
FIGS. 15A to 15C are views illustrating a high-hardness member included in a window member of the multi-foldable electronic device according to various embodiments.
FIGS. 16A and 16B are views illustrating one example of the external appearance of a slidable electronic device according to various embodiments.
FIG. 17 is a view illustrating a window member applied to the slidable electronic device according to various embodiments.
FIG. 18 is a view illustrating a portion of a high-hardness member included in the window member illustrated in FIG. 17
FIG. 19 is a view illustrating a high-hardness member of a window member applied to a rollable electronic device according to various embodiments.
FIGS. 20A and 20B are views specifically illustrating a portion of the high-hardness member illustrated in FIG. 19.
FIG. 21 is a view illustrating one example of a method of manufacturing a window member applied to electronic devices with form factors according to various embodiments.
In the following description made with respect to the accompanying drawings, identical or similar components will be assigned with identical or similar reference numerals.

### [Mode for Invention]

Hereinafter, various embodiments of the disclosure will be described with reference to accompanying drawings. Accordingly, those of ordinary skill in the art will recognize that modification, equivalent, and/or alternative on the various embodiments described herein can be variously made without departing from the scope and spirit of the disclosure.

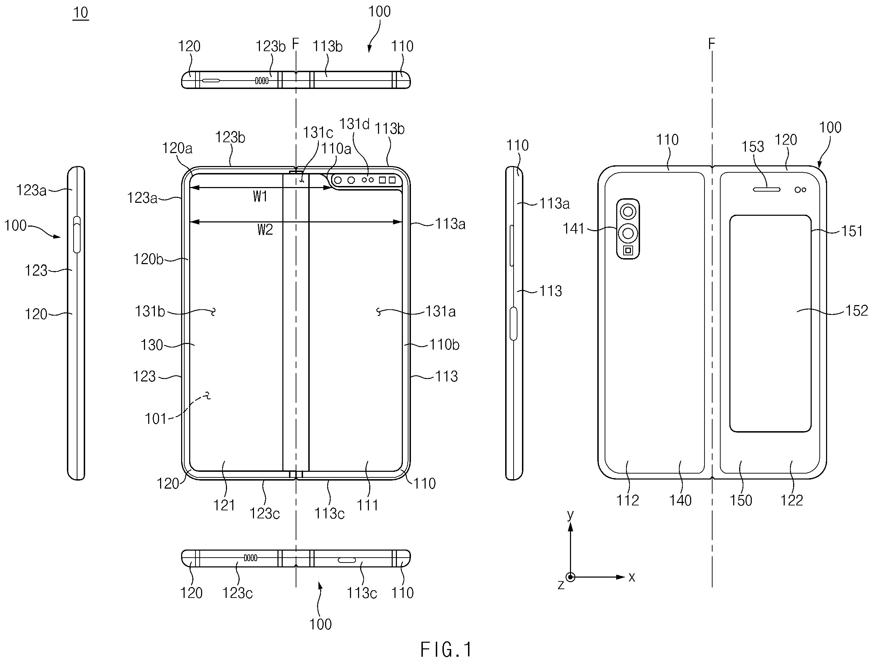

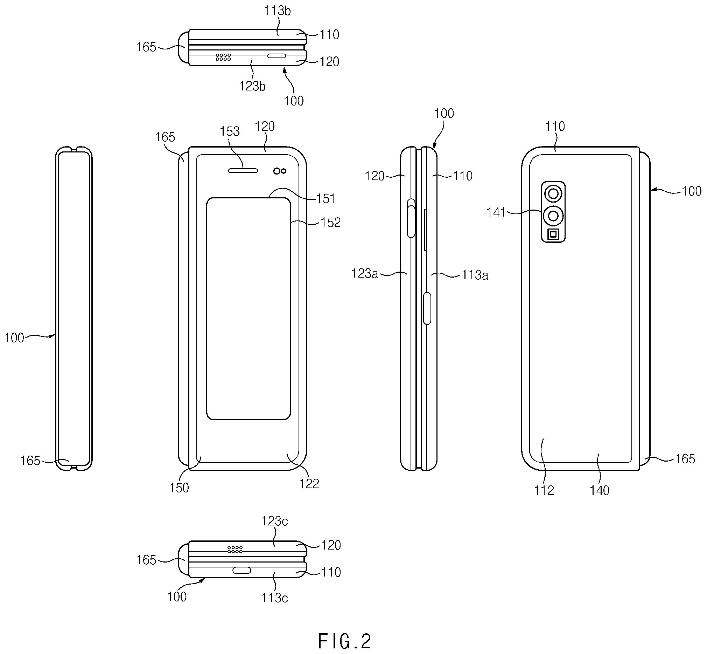

FIG. 1 is a view illustrating a flat state of an electronic device 100 according to various embodiments of the disclosure. FIG. 2 is a view illustrating a folded state of the electronic device 100 of FIG. 1 according to various embodiments of the disclosure.

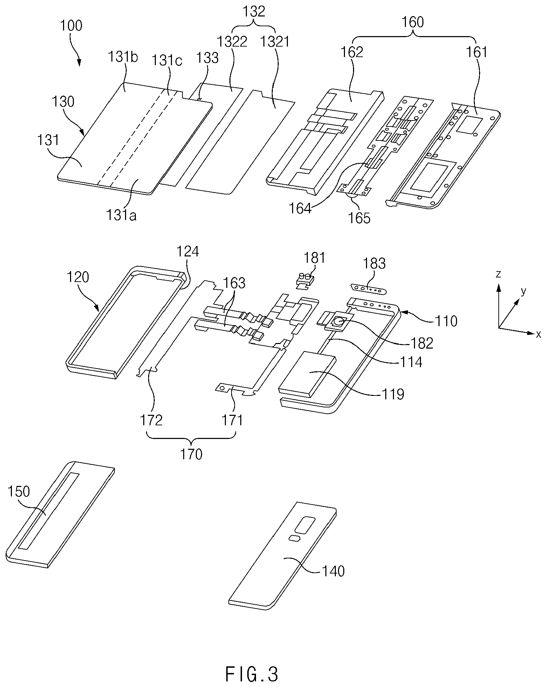

Referring to FIG. 1, the electronic device 100 may include a pair of housings 110 and 120 (e.g., foldable housings) rotatably coupled through a hinge structure (e.g., a hinge structure 164 of FIG. 3) so as to be folded relative to each other, a hinge cover (e.g., a hinge cover 165 of FIG. 2) that covers foldable portions of the pair of housings 110 and 120, and a display 130 (e.g., a flexible display or a foldable display) disposed in a space formed by the pair of housings 110 and 120. In this disclosure, a surface on which the display 130 is disposed may be defined as a front surface of the electronic device 100, and a surface facing away from the front surface may be defined as a rear surface of the electronic device 100. In addition, a surface surrounding a space between the front surface and the rear surface may be defined as a side surface of the electronic device 100.

In an embodiment, the pair of housings 110 and 120 may include the first housing 110 including a sensor region 131d, the second housing 120, a first back cover 140, and a second back cover 150. The pair of housings 110 and 120 of the electronic device 100 are not limited to the form and coupling illustrated in FIGS. 1 and 2 and may be implemented by a combination and/or coupling of other shapes or components. For example, in another embodiment, the first housing 110 and the first back cover 140 may be integrally formed with each other, and the second housing 120 and the second back cover 150 may be integrally formed with each other.

According to an embodiment, the first housing 110 and the second housing 120 may be disposed on opposite sides of a folding axis (an axis F) and may have entirely symmetrical shapes with respect to the folding axis (the axis F). According to an embodiment, the angle or distance formed by the first housing 110 and the second housing 120 may vary depending on whether the electronic device 100 is in a flat state (or, an folded state), a folded state, or an intermediate state. According to an embodiment, unlike the second housing 120, the first housing 110 may additionally include the sensor region 131d in which various sensors are disposed. However, the first housing 110 and the second housing 120 may have shapes symmetrical to each other in the other regions. In another embodiment, the sensor region 131d may be additionally disposed in, or replaced with, at least a partial region of the second housing 120.

In an embodiment, the electronic device 100 may be operated in an in-folding manner and/or an out-folding manner as the first housing 110 is rotated in the range of 0 degrees to 360 degrees relative to the second housing 120 through the hinge structure (e.g., the hinge structure 164 of FIG. 3). According to various embodiments, the hinge structure 164 may be formed in the vertical direction or the horizontal direction when the electronic device 100 is viewed from above. According to various embodiments, the hinge structure 164 may include a plurality of hinge structures. For example, the plurality of hinge structures may all be arranged in the same direction. In another example, some of the plurality of hinge structures may be arranged in different directions and folded.

In an embodiment, the first housing 110 may include a first surface 111 connected to the hinge structure (e.g., the hinge structure 164 of FIG. 3) in the flat state of the electronic device 100 and disposed to face toward the front surface of the electronic device 100, a second surface 112 facing away from the first surface 111, and a first side member 113 surrounding at least a portion of a space between the first surface 111 and the second surface 112. In an embodiment, the first side member 113 may include a first side surface 113 a disposed parallel to the folding axis (the axis F), a second side surface 113b extending from one end of the first side surface 113a in a direction perpendicular to the folding axis, and a third side surface 113c extending from an opposite end of the first side surface 113a in the direction perpendicular to the folding axis (the axis F).

In an embodiment, the second housing 120 may include a third surface 121 connected to the hinge structure (e.g., the hinge structure 164 of FIG. 3) in the flat state of the electronic device 100 and disposed to face toward the front surface of the electronic device 100, a fourth surface 122 facing away from the third surface 121, and a second side member 123 surrounding at least part of a space between the third surface 121 and the fourth surface 122. In an embodiment, the second side member 123 may include a fourth side surface 123a disposed parallel to the folding axis (the axis F), a fifth side surface 123b extending from one end of the fourth side surface 123a in a direction perpendicular to the folding axis (the axis F), and a sixth side surface 123c extending from an opposite end of the fourth side surface 123a in the direction perpendicular to the folding axis (the axis F). In an embodiment, the third surface 121 may face the first surface 111 in the folded state.

In an embodiment, the electronic device 100 may include a recess 101 formed to accommodate the display 130 through a structural shape coupling of the first housing 110 and the second housing 120. The recess 101 may have substantially the same size as the display 130. In an embodiment, due to the sensor region 131d, the recess 101 may have two or more different widths in the direction perpendicular to the folding axis (the axis F). For example, the recess 101 may have a first width W1 between a first portion 120a of the second housing 120 that is parallel to the folding axis (the axis F) and a first portion 110a of the first housing 110 that is formed at the periphery of the sensor region 131d and a second width W2 formed by a second portion 120b of the second housing 120 and a second portion 110b of the first housing 110 that does not correspond to the sensor region 131d and that is parallel to the folding axis (the axis F). In this case, the second width W2 may be greater than the first width W1. For example, the recess 101 may have the first width W1 between the first portion 110a of the first housing 110 and the first portion 120a of the second housing 120 that have shapes asymmetrical to each other and the second width W2 between the second portion 110b of the first housing 110 and the second portion 120b of the second housing 120 that have shapes symmetrical to each other. In an embodiment, the first portion 110a and the second portion 110b of the first housing 110 may have different distances from the folding axis (the axis F). The width of the recess 101 is not limited to the illustrated example. In various embodiments, the recess 101 may have two or more different widths due to the form of the sensor region 131d or the asymmetrically-shaped portions of the first housing 110 and the second housing 120.

In an embodiment, at least a portion of the first housing 110 and at least a portion of the second housing 120 may be formed of a metallic material or a non-metallic material that has a selected magnitude of rigidity to support the display 130.

In an embodiment, the sensor region 131d may have a certain region adjacent to one corner of the first housing 110. However, the arrangement, shape, or size of the sensor region 131d is not limited to the illustrated example. For example, in another embodiment, the sensor region 131d may be provided in another corner of the first housing 110 or in any region between an upper corner and a lower corner of the first housing 110. In another embodiment, the sensor region 131d may be disposed in at least a partial region of the second housing 120. In another embodiment, the sensor region 131d may be disposed to extend to the first housing 110 and the second housing 120. In an embodiment, the electronic device 100 may include components that perform various functions and that are disposed to be exposed on the front surface of the electronic device 100 though the sensor region 131d or one or more openings formed in the sensor region 131d. In various embodiments, the components may include, for example, at least one of a front camera device, a receiver, a proximity sensor, an illuminance sensor, an iris recognition sensor, an ultrasonic sensor, or an indicator.

In an embodiment, the first back cover 140 may be disposed on the second surface 112 of the first housing 110 and may have a substantially rectangular periphery. In an embodiment, at least a portion of the periphery may be surrounded by the first housing 110. Similarly, the second back cover 150 may be disposed on the fourth surface 122 of the second housing 120, and at least a portion of the periphery of the second back cover 150 may be surrounded by the second housing 120.

In the illustrated embodiment, the first back cover 140 and the second back cover 150 may have shapes substantially symmetrical to each other with respect to the folding axis (the axis F). In another embodiment, the first back cover 140 and the second back cover 150 may include various different shapes. In another embodiment, the first back cover 140 may be integrally formed with the first housing 110, and the second back cover 150 may be integrally formed with the second housing 120.

In an embodiment, the first back cover 140, the second back cover 150, the first housing 110, and the second housing 120 may provide, through a mutually coupled structure, a space in which various components (e.g., a printed circuit board, an antenna module, a sensor module, or a battery) of the electronic device 100 are disposed. In an embodiment, one or more components may be disposed, or visually exposed, on the rear surface of the electronic device 100. For example, one or more components or sensors may be visually exposed through a first rear region 141 of the first back cover 140. In various embodiments, the sensors may include a proximity sensor, a rear camera device, and/or a flash. In another embodiment, at least a portion of a sub-display 152 may be visually exposed through a second rear region 151 of the second back cover 150. In another embodiment, the electronic device 100 may include a speaker module 153 disposed through at least a partial region of the second back cover 150.

The display 130 may be disposed in the space formed by the pair of housings 110 and 120. For example, the display may be seated in the recess 101 formed by the pair of housings 110 and 120 and may be disposed to substantially occupy most of the front surface of the electronic device 100. Accordingly, the front surface of the electronic device 100 may include the display 130, a partial region (e.g., a peripheral region) of the first housing 110 that is adjacent to the display 130, and a partial region (e.g., a peripheral region) of the second housing 120 that is adjacent to the display 130. In an embodiment, the rear surface of the electronic device 100 may include the first back cover 140, a partial region (e.g., a peripheral region) of the first housing 110 that is adjacent to the first back cover 140, the second back cover 150, and a partial region (e.g., a peripheral region) of the second housing 120 that is adjacent to the second back cover 150.

In an embodiment, the display 130 may refer to a display, at least a partial region of which is able to be deformed to be flat or curved. In an embodiment, the display 130 may include a third region 131c, a first region 131a disposed on one side of the third region 131c (e.g., on the right side of the third region 131c), and a second region 131b disposed on an opposite side of the third region 131c (e.g., on the left side of the third region 131c). For example, the first region 131a may be disposed on the first surface 111 of the first housing 110, and the second region 131b may be disposed on the third surface 121 of the second housing 120. In an embodiment, the division of the display 130 into the regions is illustrative, and the display 130 may be divided into a plurality of regions (e.g., four or more regions, or two regions) depending on the structure or function of the display 130. For example, in the embodiment illustrated in FIG. 1, the regions of the display 130 may be divided from each other by the third region 131c or the folding axis (the axis F) that extends parallel to the y-axis. However, in another embodiment, the display 130 may be divided into regions with respect to a different third region (e.g., a third region parallel to the x-axis) or a different folding axis (e.g., a folding axis parallel to the x-axis). The above-described division of the display into the regions may be merely a physical division by the pair of housings 110 and 120 and the hinge structure (e.g., the hinge structure 164 of FIG. 3), and one full screen may be displayed on the display 130 substantially through the pair of housings 110 and 120 and the hinge structure (e.g., the hinge structure 164 of FIG. 3). In an embodiment, the first region 131a and the second region 131b may have shapes entirely symmetrical to each other with respect to the third region 131c. However, unlike the second region 131b, the first region 131a may include a notch region (e.g., a notch region 133 of FIG. 3) that is cut depending on the presence of the sensor region 131d, and in the other regions, the first region 131a may have a shape symmetrical to the second region 131b. For example, the first region 131a and the second region 131b may include portions having shapes symmetrical to each other and portions having shapes asymmetrical to each other.

Referring to FIG. 2, the hinge cover 165 may be disposed between the first housing 110 and the second housing 120 and may be configured to hide an internal component (e.g., the hinge structure 164 of FIG. 3). In an embodiment, the hinge cover 165 may be hidden by a portion of the first housing 110 and a portion of the second housing 120, or may be exposed to the outside, depending on an operational state (a flat state or a folded state) of the electronic device 100.

For example, when the electronic device 100 is in the flat state as illustrated in FIG. 1, the hinge cover 165 may be hidden by the first housing 110 and the second housing 120 and thus may not be exposed. In another example, when the electronic device 100 is in the folded state (e.g., a completely folded state) as illustrated in FIG. 2, the hinge cover 165 may be exposed to the outside from between the first housing 110 and the second housing 120. In another example, when the electronic device 100 is in an intermediate state in which the first housing 110 and the second housing 120 are folded with a certain angle, the hinge cover 165 may be at least partially exposed outside the electronic device 100 from between the first housing 110 and the second housing 120. In this case, the exposed region may be smaller than that in the completely folded state. In an embodiment, the hinge cover 165 may include a curved surface.

Hereinafter, operations of the first housing 110 and the second housing 120 and the regions of the display 130 depending on operational states (e.g., a flat state and a folded state) of the electronic device 100 will be described.

In an embodiment, when the electronic device 100 is in the flat state (e.g., the state of FIG. 1), the first housing 110 and the second housing 120 may form an angle of 180 degrees, and the first region 131a and the second region 131b of the display may be disposed to face the same direction. Furthermore, the third region 131c may form the same plane as the first region 131a and the second region 131b. In another embodiment, when the electronic device 100 is in the flat state, the first housing 110 and the second housing 120 may rotate relative to each other through an angle of 360 degrees and may be oppositely folded such that the second surface 112 and the fourth surface 122 face each other.

In an embodiment, when the electronic device 100 is in the folded state (e.g., the state of FIG. 2), the first housing 110 and the second housing 120 may be disposed to face each other. The first region 131a and the second region 131b of the display 130 may face each other while forming a narrow angle (e.g., between 0 degrees and 10 degrees). At least a portion of the third region 131c may be curved with a certain curvature.

In an embodiment, when the electronic device 100 is in an intermediate state, the first housing 110 and the second housing 120 may be disposed at a certain angle. The first region 131a and the second region 131b of the display 130 may form an angle that is greater than that in the folded state and smaller than that in the flat state. At least a portion of the third region 131c may be curved with a certain curvature. In this case, the curvature may be smaller than that in the folded state.

FIG. 3 is an exploded perspective view of the electronic device 100 according to various embodiments of the disclosure.

Referring to FIG. 3, in an embodiment, the electronic device 100 may include the display 130, a support member assembly 160, at least one printed circuit board 170, the first housing 110, the second housing 120, the first back cover 140, and the second back cover 150. In this disclosure, the display (the display unit) 130 may be referred to as the display module or the display assembly.

The display 130 may include a display panel 131 (e.g., a flexible display panel) and at least one plate 132 or layer on which the display panel 131 is seated. In an embodiment, the plate 132 may be disposed between the display panel 131 and the support member assembly 160. The display panel 131 may be disposed on at least a portion of one surface of the plate 132. The plate 132 may include a first plate 1321 and a second plate 1322 divided from each other with respect to the hinge structure 164. The plate 132 may include at least one member that is not able to be folded together when the first housing 110 and the second housing 120 are rotated to a folded state and/or a flat state with respect to the hinge structure 164. The plate 132 may include at least one subsidiary material layer (e.g., a graphite member) and/or at least one conductive plate (e.g., a Cu sheet) disposed on the rear surface of the display panel 131. In an embodiment, the plate 132 may be formed in a shape corresponding to the display panel 131. For example, a partial region of the first plate 1321 may be formed in a shape corresponding to the notch region 133 of the display panel 131.

The support member assembly 160 may include a first support member 161, a second support member 162, the hinge structure 164 disposed between the first support member 161 and the second support member 162, the hinge cover 165 covering the hinge structure 164 when the hinge structure 164 is viewed from the outside, and at least one wiring member 163 (e.g., a flexible printed circuit board (FPCB)) across the first support member 161 and the second support member 162.

In an embodiment, the support member assembly 160 may be disposed between the plate 132 and the at least one printed circuit board 170. For example, the first support member 161 may be disposed between the first region 131a of the display 130 and a first printed circuit board 171. The second support member 162 may be disposed between the second region 131b of the display 130 and a second printed circuit board 172.

In an embodiment, at least a portion of the wiring member 163 and at least a portion of the hinge structure 164 may be disposed inside the support member assembly 160. The wiring member 163 may be disposed in a direction (e.g., the x-axis direction) across the first support member 161 and the second support member 162. The wiring member 163 may be disposed in a direction (e.g., the x-axis direction) perpendicular to a folding axis of the third region 131c (e.g., the y-axis or the folding axis F of FIG. 1).

In an embodiment, as mentioned above, the at least one printed circuit board 170 may include the first printed circuit board 171 disposed on the first support member 161 side and the second printed circuit board 172 disposed on the second support member 162 side. The first printed circuit board 171 and the second printed circuit board 172 may be disposed in a space formed by the support member assembly 160, the first housing 110, the second housing 120, the first back cover 140, and the second back cover 150. Components for implementing various functions of the electronic device 100 may be mounted on the first printed circuit board 171 and the second printed circuit board 172.

In an embodiment, the first housing structure 110 may contain the first printed circuit board 171, a battery 119, at least one sensor module 181, or at least one camera module 182 that is disposed in a space formed by the first support member 161. The first housing 110 may include a glass window 183 disposed at a position corresponding to the notch region 133 of the display 130 to protect the at least one sensor module 181 and the at least one camera module 182. In an embodiment, the second housing 120 may contain the second printed circuit board 172 disposed in a space formed by the second support member 162. According to an embodiment, the first housing 110 and the first support member 161 may be integrally formed with each other. According to an embodiment, the second housing 120 and the second support member 162 may also be integrally formed with each other. According to an embodiment, the sub-display 152 may be disposed on at least a portion of the second housing 120. According to an embodiment, the sub-display 152 may be disposed to be visible from the outside through at least a partial region of the second back cover 150.

In an embodiment, the first housing 110 may include a first rotation support surface 114, and the second housing 120 may include a second rotation support surface 124 corresponding to the first rotation support surface 114. The first rotation support surface 114 and the second rotation support surface 124 may include a curved surface corresponding to the curved surface included in the hinge cover 165.

In an embodiment, when the electronic device 100 is in a flat state (e.g., the state of FIG. 1), the first rotation support surface 114 and the second rotation support surface 124 may cover the hinge cover 165 such that the hinge cover 165 is not exposed, or is minimally exposed, on the rear surface of the electronic device 100. In an embodiment, when the electronic device 100 is in a folded state (e.g., the state of FIG. 2), the first rotation support surface 114 and the second rotation support surface 124 may rotate along the curved surface included in the hinge cover 165 such that the hinge cover 165 is maximally exposed on the rear surface of the electronic device 100.

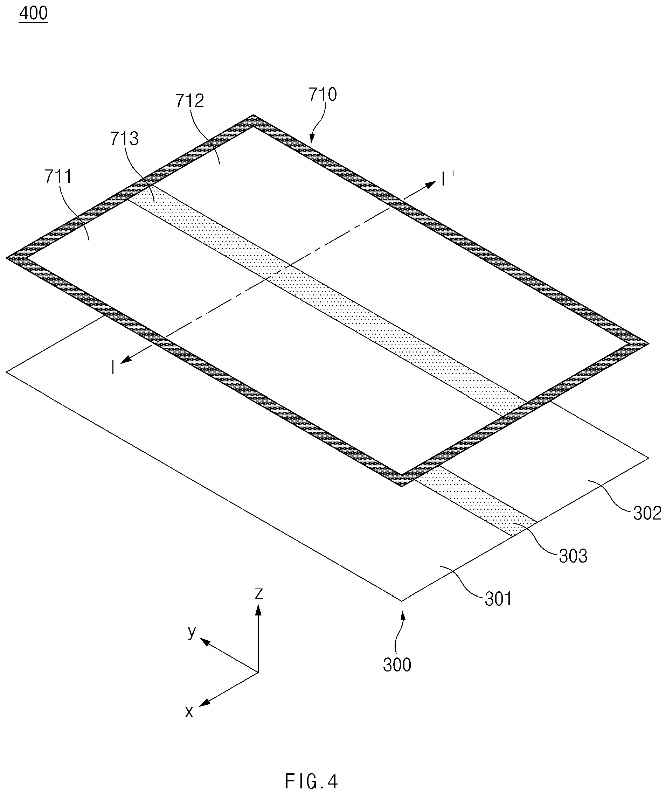

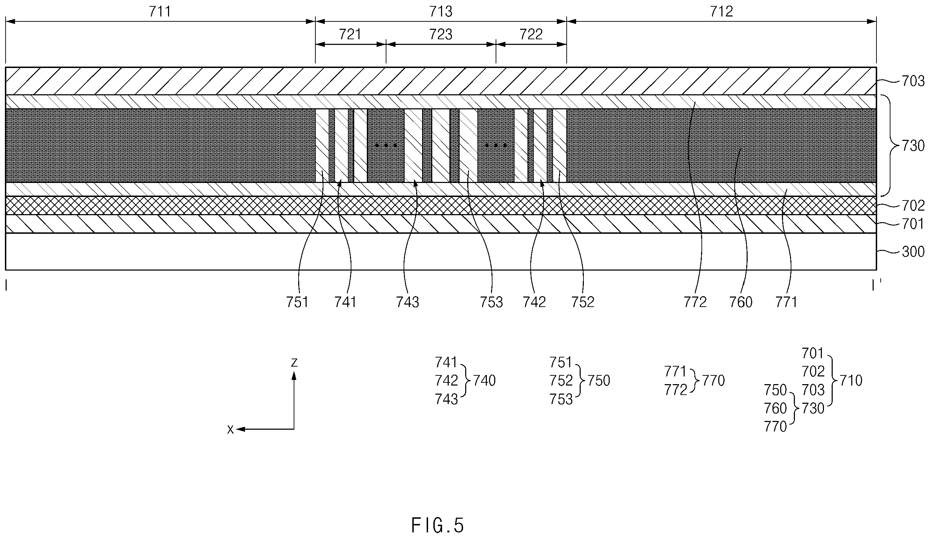

FIG. 4 is a view illustrating an electronic device 400 including a window member 710 and a display module 300 according to various embodiments, and FIG. 5 is a view taken along line "I-I'" in FIG. 4. The electronic device 400 illustrated in FIGS. 4 and 5 may be similar to the electronic device 100 mentioned through the previous drawings, or may further include other embodiments.

Referring to FIGS. 4 and 5, the window member 710 of the electronic device 400 according to various embodiments (e.g., the electronic device 100 of FIG. 1) may include a first non-folding region 711, a second non-folding region 712, and a folding region 713.

The first non-folding region 711 may face a first region 301 of the display module 300. The first non-folding region 711 may face a first housing (e.g., the first housing 110 of FIG. 3). At least a portion of the first non-folding region 711 and the first region 301 of the display module 300 may be regions that are flat in a flat state and a folded state of the electronic device.

The second non-folding region 712 may face a second region 302 of the display module 300. The second non-folding region 712 may face a second housing (e.g., the second housing 120 of FIG. 3). At least a portion of the second non-folding region 712 and the second region 302 of the display module 300 may be regions that are flat in the flat state and the folded state of the electronic device.

The folding region 713 (or, the deformation region) may face a third region 303 of the display module 300. The folding region 713 may face a hinge structure (e.g., the hinge structure 164 of FIG. 3). The folding region 713 may be disposed between the first non-folding region 711 and the second non-folding region 712. The folding region 713 may be a foldable deformation region that is flat in the flat state and curved in the folded state.

The folding region 713 may include a first main deformation region 723, a first sub-deformation region 721, and a second sub-deformation region 722. The first main deformation region 723 may be disposed between the first sub-deformation region 721 and the second sub-deformation region 722. The first main deformation region 723, the first sub-deformation region 721, and the second sub-deformation region 722 may be curved with different radii of curvature when the electronic device is folded. For example, the first main deformation region 723 may be curved with a larger radius of curvature than the first sub-deformation region 721 and the second sub-deformation region 722.

According to various embodiments, the window member 710 may include a plurality of layers sequentially stacked on the display module 300 toward the front surface (e.g., a surface facing toward the +Z-axis) of the electronic device. For example, the window member 710 may include a cushion member 701, a glass member 702, an impact protection member 730, and an external protection member 703 that are sequentially stacked on the display module 300.

The cushion member 701 may be disposed between the glass member 702 and the display module 300. The cushion member 701 may absorb impact applied to the display module 300 and thus may protect the display module 300. The cushion member 701 may be formed of a material having characteristics that are the same as, or similar to, the characteristics of the external protection member 703. The material of the cushion member 701 is not particularly limited, and the cushion member 701 may be formed of polyethylene terephthalate (PET), polypropylene (PP), polyurethane (PU), or polyolefine (PO).

The glass member 702 may be disposed between the cushion member 701 and the impact protection member 730. The glass member 702 may serve to support the window member 710.

The impact protection member 730 may include a low-hardness member 770 (or, a second hardness member), filling members 750, and a high-hardness member 760 (or, a first hardness member).

The low-hardness member 770 may include at least one of a first low-hardness member 771 or a second low-hardness member 772. At least one of the first low-hardness member 771 or the second low-hardness member 772 may have viscosity. For example, when the first low-hardness member 771 has viscosity, the glass member 702 may be coupled with the high-hardness member 760 through the first low-hardness member 771 without a separate adhesive member. When the second low-hardness member 772 has viscosity, the external protection member 703 may be coupled with the high-hardness member 760 through the second low-hardness member 772 without a separate adhesive member.

The refractive index of the high-hardness member 760 may match the refractive index of at least one of the first low-hardness member 771, the second low-hardness member 772, or the filling members 750. For example, the high-hardness member 760 may have a refractive index that is the same as, or similar to, the refractive indexes of the first low-hardness member 771, the second low-hardness member 772, and the filling members 750. Light incident from the outside may be prevented from being reflected at the interface between at least one of the first low-hardness member 771, the second low-hardness member 772, or the filling members 750 and the high-hardness member 760. Accordingly, the reflectance of the external light may be reduced, and thus deterioration in visibility depending on the reflection of the external light may be prevented.

The high-hardness member 760 may be formed of a material having a higher hardness than at least one of the first low-hardness member 771, the second low-hardness member 772, or the filling members 750. The material of the high-hardness member 760 is not particularly limited, and the high-hardness member 760 may be formed of, for example, polyethylene terephthalate (PET), polypropylene (PP), polyurethane (PU), or polyolefine (PO). Because the high-hardness member 760 has a relatively high hardness, the high-hardness member 760 may reinforce the rigidity of the window member 710. At least one of the first low-hardness member 771, the second low-hardness member 772, or the filling members 750 may be formed of a material having a lower hardness than the high-hardness member 760. Because the hardness of at least one of the first low-hardness member 771, the second low-hardness member 772, or the filling members 750 is lower than the hardness of the high-hardness member 760, folding performance of the window member 710 may be secured.

The external protection member 703 may be disposed in the uppermost layer of the window member 710 to prevent an injury to a user due to scattering when thin glass included in the glass member 702 is broken. At least a portion of the external protection member 703 may be exposed outside the electronic device 400. The material of the external protection member 703 is not particularly limited, and the external protection member 703 may be formed of polyethylene terephthalate (PET), polypropylene (PP), polyurethane (PU), or polyolefine (PO). The external protection member 703 may include a glass material, or may be implemented with a film layer or a coating layer. The external protection member 703 may include a flexible material. The external protection member 703 may be formed of a transparent material having a high light transmittance.

According to various embodiments, an adhesive member may be disposed between the plurality of layers included in the window member 710. For example, an optical clear adhesive (OCA), a pressures sensitive adhesive (PSA), a heat sensitive adhesive, a light sensitive adhesive, or a double-sided tape may be used as the adhesive member.

According to various embodiments, the high-hardness member 760 may include a plurality of openings 740. The plurality of openings 740 may include first sub-openings 741, second sub-openings 742, and first main openings 743.

The first sub-openings 741 may be disposed in the first sub-deformation region 721. The second sub-openings 742 may be disposed in the second sub-deformation region 722. The first main openings 743 may be disposed in the first main deformation region 723.

The arrangement densities of the first sub-openings 741, the second sub-openings 742, and the first main openings 743 may be adjusted to correspond to the radii of curvature of the main deformation region 723, the first sub-deformation region 721, and the second sub-deformation region 722. The arrangement density of the plurality of first main openings 743 disposed in the main deformation region 723 having a relatively large radius of curvature may be higher than the arrangement density of at least one of the plurality of first sub-openings 741 or the plurality of second sub-openings 742 disposed in the sub-deformation region 721 or 722 having a relatively small radius of curvature. For example, the number of first main openings 743 may be larger than the number of at least one of the plurality of first sub-openings 741 or the plurality of second sub-openings 742.

At least one of the first sub-openings 741, the second sub-openings 742, or the first main openings 743 may be formed in a hole shape formed through the high-hardness member 760. At least one of the first sub-openings 741, the second sub-openings 742, or the first main openings 743 may have a depth that is the same as, or similar to, the thickness of the high-hardness member 760. The first main openings 743 may have a greater width than the first sub-openings 741 and the second sub-openings 742.

The plurality of openings 740 may be filled with the filling members 750. The filling members 750 may be formed of a material that is the same as, or different from, the material of at least one of the first low-hardness member 771 or the second low-hardness member 772. For example, the filling members 750 may be formed of the same material as that of the second low-hardness member 772 and may be integrated with the second low-hardness member 772.

The filling members 750 may have volumes corresponding to the widths, lengths, and depths of the plurality of openings 740. For example, the width of first filling members 751 filling the first sub-openings 741 may correspond to the width of the first sub-openings 741. The width of second filling members 752 filling the second sub-openings 742 may correspond to the width of the second sub-openings 742. The width of third filling members 753 filling the first main openings 743 may correspond to the width of the first main openings 743. Because the width of the first main openings 743 is greater than the widths of the first sub-openings 741 and the second sub-openings 742, the width of the third filling members 753 may be greater than the widths of the first filling member 751 and the second filling members 752. The third filling members 753 may have a greater width than the first filling members 751 and the second filling members 752 in the first main deformation region 723 where a relatively large load (or, deformation) occurs when the electronic device is folded. In the first main deformation region 723, the third filling members 753 may minimize stress caused by folding of the electronic device 400 and may minimize damage caused by external impact.

According to various embodiments, although it has been described that the plurality of openings 740 are disposed in the folding region 713, the plurality of openings 740 may be disposed in the non-folding regions 711 and 712. Separate openings having a smaller width than the plurality of openings 740 disposed in the folding region 713 may be disposed in the non-folding regions 711 and 712. The separate openings disposed in the non-folding regions 711 and 712 may be filled with the filling members 750. The weight of the high-hardness member 760 disposed in the non-folding regions 711 and 712 may be reduced in proportion to the densities of the separate openings disposed in the non-folding regions 711 and 712, and thus slimness and lightness of the electronic device may be implemented.

According to various embodiments, the thicknesses of the respective components included in the window member 710 may vary depending on the specification of an electronic device to which the window member 710 is applied. For example, the thicknesses of the respective components included in the window member 710 may vary depending on the radius of curvature when an electronic device is folded. A window member 710 of an electronic device folded with a relatively large radius of curvature may be formed to be thicker than a window member 710 of an electronic device folded with a relatively small radius of curvature. At least one of the cushion member 701, the glass member 702, the first low-hardness member 771, the second low-hardness member 772, the filling members 750, or the high-hardness member 760 included in the window member 710 may be formed to be thick when applied to an electronic device folded with a relatively large radius of curvature. According to an embodiment, the high-hardness member 760 may be thickest within the window member 710, and the first low-hardness member 771 and the second low-hardness member 772 may be thinnest within the window member 710. For example, the high-hardness member 760 may have a thickness of about 100 µm, at least one of the first low-hardness member 771 or the second low-hardness member 772 may have a thickness of about 10 µm, the glass member 702 may have a thickness of about 30 µm, and the cushion member 701 may have a thickness of about 48 µm.

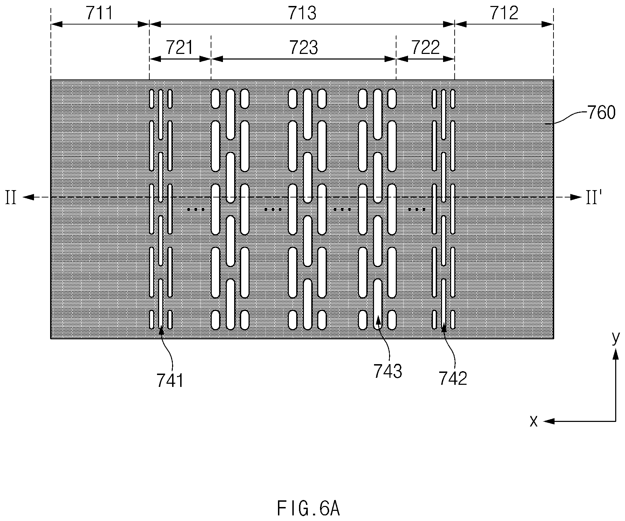

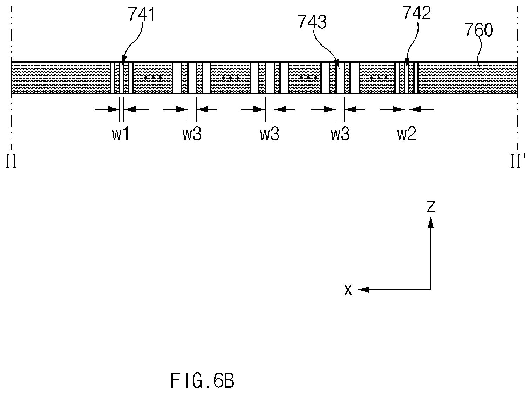

FIG. 6A is a plan view illustrating a partial region of the high-hardness member according to various embodiments, and FIG. 6B is a sectional view of a partial region of the high-hardness member taken along line "II-II"' in FIG. 6A.

Referring to FIGS. 6A and 6B, the high-hardness member 760 may include the plurality of openings 741, 742, and 743 spaced apart from each other. The plurality of openings 741, 742, and 743 may be formed in the lengthwise direction of the high-hardness member 760 (e.g., the y-axis direction) and the width direction perpendicular to the lengthwise direction (e.g., the x-axis direction).

Each of the plurality of openings 741, 742, and 743 may be formed in various shapes such as a circular shape, an oval shape, or a polygonal shape (e.g., a quadrangular shape). For example, the plurality of openings 741, 742, and 743 may be formed in a long oval shape in the lengthwise direction of the high-hardness member 760 (e.g., the y-axis direction). The plurality of openings 741, 742, and 743 may alternate and coincide with one another in the width direction of the high-hardness member 760 (e.g., the x-axis direction). The plurality of openings 741, 742, and 743 may be arranged at regular or irregular intervals in the lengthwise direction (e.g., the y-axis direction) and/or the width direction (e.g., the x-axis direction). The plurality of openings 741, 742, and 743 may be formed in the same shape or different shapes within the high-hardness member 760. For example, the high-hardness member 760 may be formed in a perforated lattice structure, a slit structure, or an opening structure by the plurality of openings 741, 742, and 743.

According to various embodiments, the width of at least one of the first sub-openings 741, the second sub-openings 742, or the first main openings 743 may be different from the widths of the other openings. The width w3 of the first main openings 743 may be greater than the width w1 or w2 of at least one of the first sub-openings 741 or the second sub-openings 742. The width w1 of the first sub-openings 741 and the width w2 of the second sub-openings 742 may be narrower than the width w3 of the first main openings 743. The width w1 of the first sub-openings 741 and the width w2 of the second sub-openings 742 may be different from, or the same as, each other. For example, the first main openings 743 may be wider than the first sub-openings 741 and the second sub-openings 742 that have the same width (w1=w2). A minimum value of the width w3 of the first main openings 743 may be greater than a maximum width of at least one of the first sub-openings 741 or the second sub-openings 742.

According to various embodiments, the third width w3 of the first main openings 743 may be gradually decreased from the center of the first main deformation region 723 toward each of the first sub-deformation region 721 and the second sub-deformation region 722.

According to various embodiments, the first width w1 of the first sub-openings 741 may be gradually decreased toward the first non-folding region 711. The second width w2 of the second sub-openings 742 may be gradually decreased toward the second non-folding region 712. The first sub-openings 741 may have a gradually decreasing width from one side (e.g., a side facing toward the +x-axis) of the first sub-deformation region 721 adjacent to the first main deformation region 723 toward an opposite side (e.g., a side facing toward the -x-axis) of the first sub-deformation region 721 adjacent to the first non-folding region 711. The second sub-openings 742 may have a gradually decreasing width from an opposite side of the second sub-deformation region 722 adjacent to the first main deformation region 723 toward one side of the second sub-deformation region 722 adjacent to the second non-folding region 712.

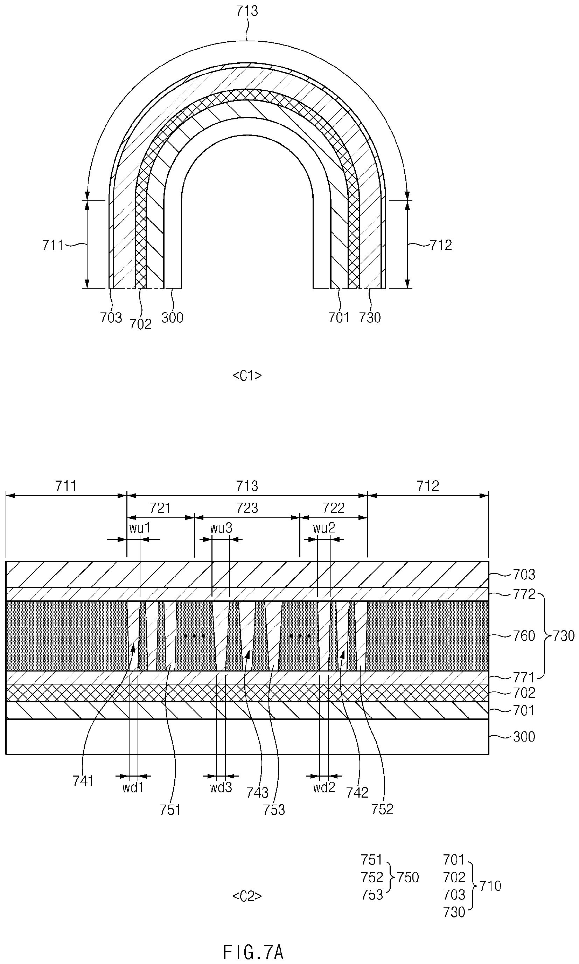

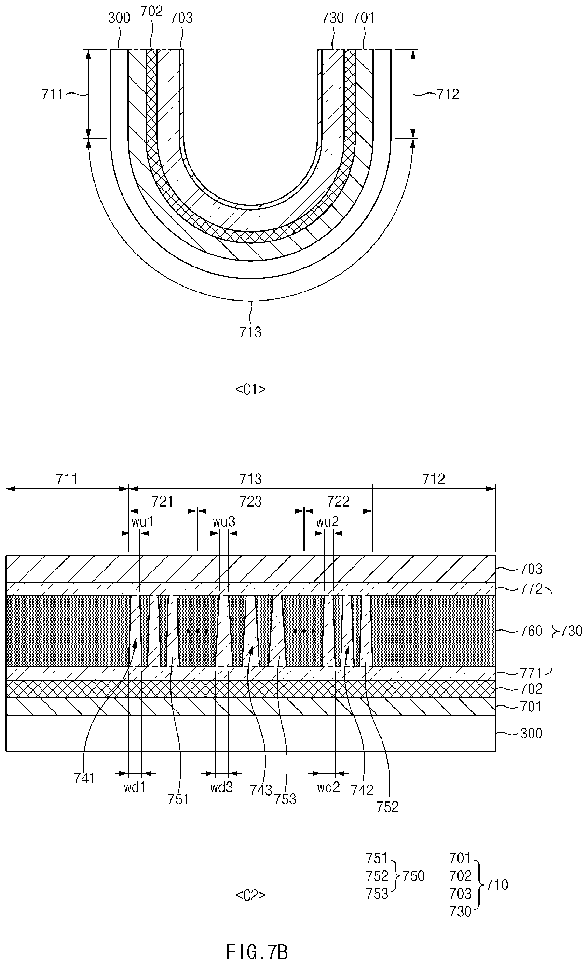

FIG. 7A is a view illustrating a partial region of a foldable electronic device of an out-folding type according to various embodiments, and FIG. 7B is a view illustrating a partial region of a foldable electronic device of an in-folding type according to various embodiments. In FIGS. 7A and 7B, states C1 schematically illustrate folded states of the partial regions of the foldable electronic devices, and states C2 illustrate the first non-folding regions 711, the second non-folding regions 712, and the folding regions 713 (or, the deformation regions) of the window members 710 in detail. Furthermore, in FIGS. 7A and 7B, at least some components of the window members may be substantially the same as the components of FIG. 5. The same components may be assigned with the same reference numerals, and repetitive descriptions may be omitted.

Referring to FIGS. 7A and 7B, the widths of the filling members 750 included in the window members 710 of the foldable electronic devices according to various embodiments may be varied gradually or in a stepwise manner toward display modules 300. Contact surfaces between at least one of the first to third filling members 751, 752, and 753 and the high-hardness member 760 may be formed obliquely or in a step shape.

The electronic device according to the embodiment illustrated in FIG. 7A may be folded in an out-folding manner such that the external protection member 703 of the window member 710 is exposed to the outside. When the electronic device is out-folded, the window member 710 may be changed to have a radius of curvature greater than that of the display module 300 and may be subjected to high tensile stress.

The widths of the filling members 750 may be increased gradually or in a stepwise manner toward the external protection member 703 subjected to relatively high tensile stress. The widths of the filling members 750 may be decreased gradually or in a stepwise manner toward the display module 300 subjected to relatively low tensile stress. For example, the filling members 750 may have inclined surfaces in an inverted tapered shape in the folding region 713.

The first filling members 751, the second filling members 752, and the third filling members 753 may be formed such that upper widths wu1, wu2, and wu3 toward the second low-hardness member 772 are greater than lower widths wd1, wd2, and wd3 toward the first low-hardness member 771. For example, the first filling members 751 may be formed such that the first upper width wu1 toward the second low-hardness member 772 is greater than the first lower width wd1 toward the first low-hardness member 771. The second filling members 752 may be formed such that the second upper width wu2 toward the second low-hardness member 772 is greater than the second lower width wd2 toward the first low-hardness member 771. The third filling members 753 may be formed such that the third upper width wu3 toward the second low-hardness member 772 is greater than the third lower width wd3 toward the first low-hardness member 771. The filling members 750 having the wide upper widths wu1, wu2, and wu3 toward the second low-hardness member 772 may be easily deformed depending on the folded state of the electronic device, thereby improving folding performance of the electronic device.

The electronic device according to the embodiment illustrated in FIG. 7B may be folded in an in-folding manner such that the external protection member 703 of the window member 710 is not exposed to the outside. When the electronic device is in-folded, the display module 300 may be changed to have a radius of curvature greater than that of the window member 710 and may be subjected to higher tensile stress than the window member 710.

The widths of the filling members 750 may be increased gradually or in a stepwise manner toward the display module 300 subjected to relatively high tensile stress. The widths of the filling members 750 may be decreased gradually or in a stepwise manner toward the external protection member 703 subjected to relatively low tensile stress. The filling members 750 may have inclined surfaces in a normal tapered shape in the folding region 713.

The first filling members 751, the second filling members 752, and the third filling members 753 may be formed such that lower widths wd1, wd2, and wd3 toward the first low-hardness member 771 are greater than upper widths wu1, wu2, and wu3 toward the second low-hardness member 772. Accordingly, the filling members 750 may be easily deformed depending on the folded state of the electronic device, thereby improving folding performance of the electronic device.

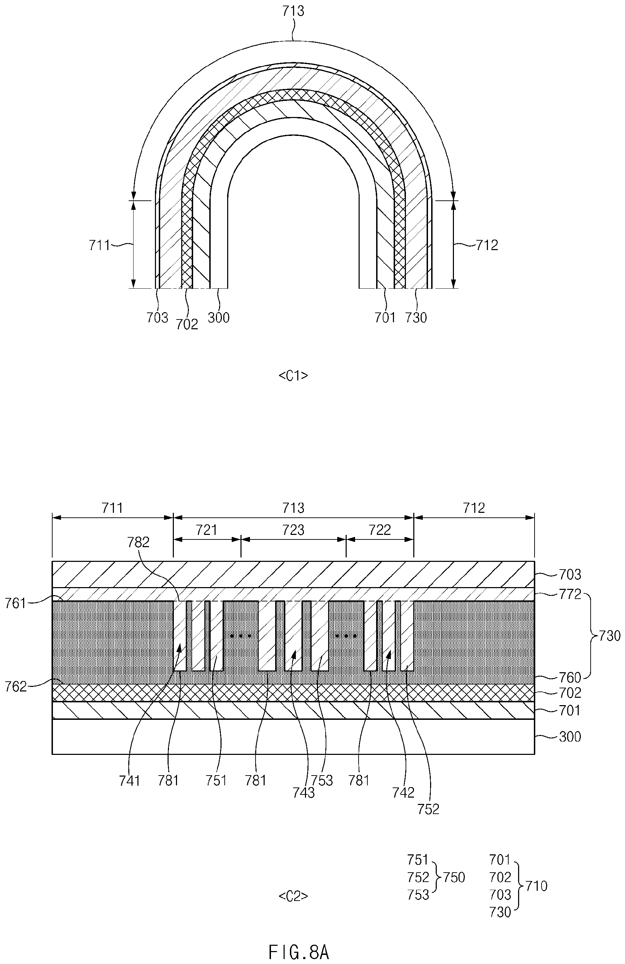

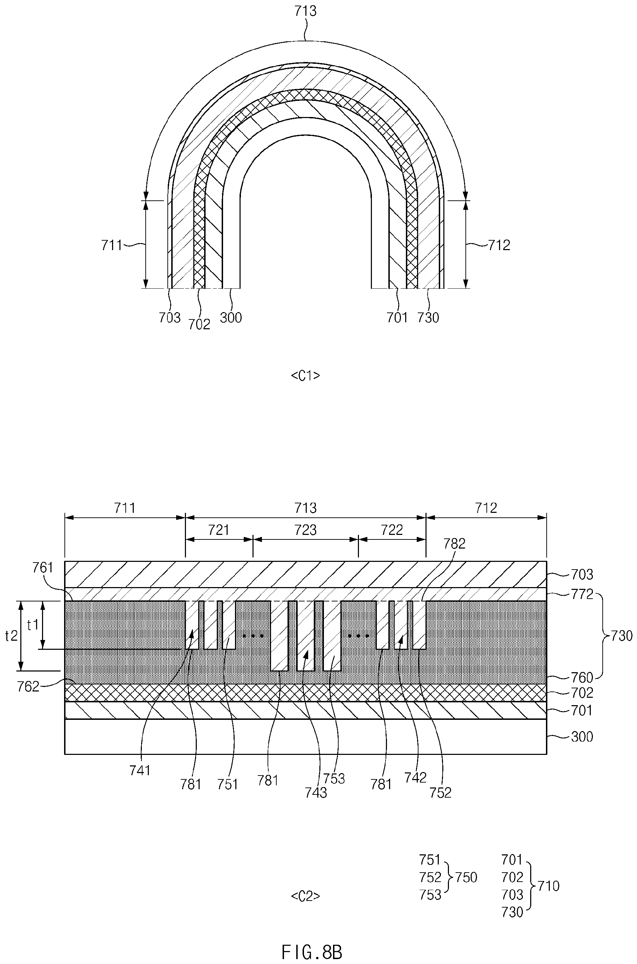

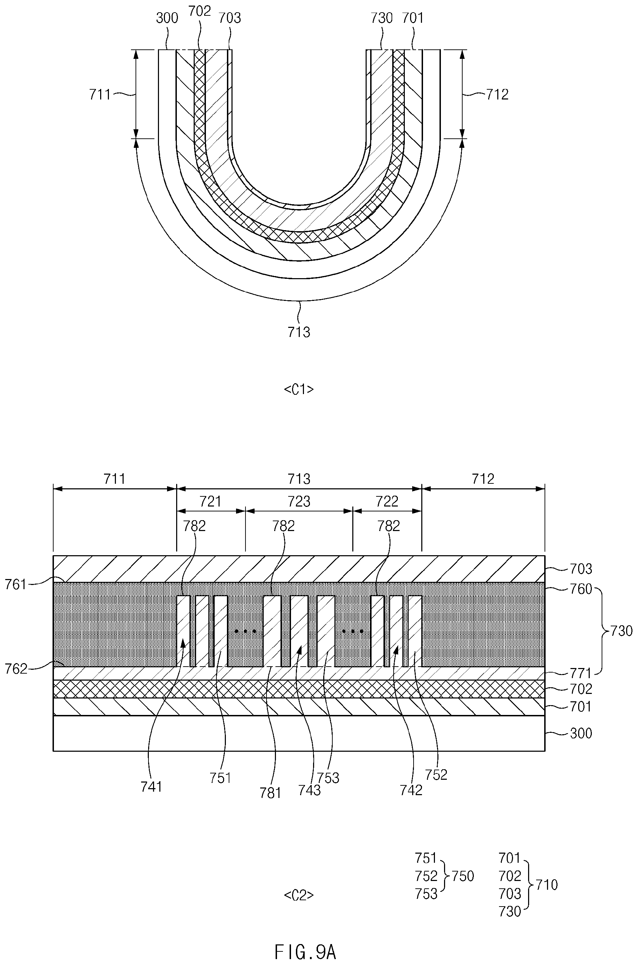

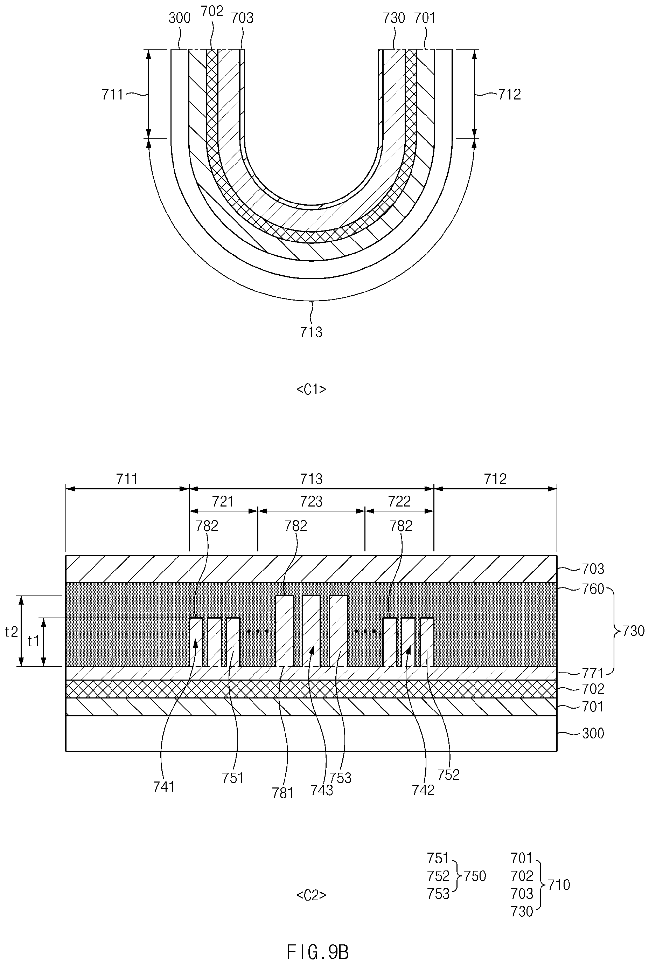

FIGS. 8A and 8B are sectional views illustrating a partial region of a foldable electronic device of an out-folding type according to various embodiments, and FIGS. 9A and 9B are sectional views illustrating a partial region of a foldable electronic device of an in-folding type according to various embodiments. In FIGS. 8A to 9B, states C1 schematically illustrate folded states of the partial regions of the foldable electronic devices, and states C2 illustrate the first non-folding regions 711, the second non-folding regions 712, and the folding regions 713 (or, the deformation regions) of the window members 710 in detail. Furthermore, in FIGS. 8A to 9B, at least some components of the window members may be substantially the same as the components of FIG. 5. The same components may be assigned with the same reference numerals, and repetitive descriptions may be omitted.

Referring to FIGS. 8A to 9B, the window members 710 of the electronic devices according to various embodiments may not include one of the first low-hardness member 771 and the second low-hardness member 772 and may include only the other one. One of first surfaces 781 and second surfaces 782 of the filling members 750 may make contact with the high-hardness member 760. The other one of the first surfaces 781 and the second surfaces 782 of the filling members 750 may make contact with one of the first low-hardness member 771 and the second low-hardness member 772. At least one of the first sub-openings 741, the second sub-openings 742, or the first main openings 743 filled with the filling members 750 may be formed in a groove shape that penetrates a portion of the high-hardness member 760.

The electronic device of the out-folding type illustrated in FIGS. 8A and 8B may include the second low-hardness member 772 adjacent to the external protection member 703 deformed with a large radius of curvature when the electronic device is folded. A first low-hardness member (e.g., the first low-hardness member 771 of FIG. 5) that is deformed with a smaller radius of curvature than the second low-hardness member 772 may be omitted. The second low-hardness member 772 may be disposed between the external protection member 703 and the high-hardness member 760. The glass member 702 subjected to a lower tensile stress than the second low-hardness member 772 may make direct contact with the high-hardness member 760 without the separate first low-hardness member. The window member 710, from which the first low-hardness member is omitted, may be made slim and light.

The electronic device of the in-folding type illustrated in FIGS. 9A and 9B may include the first low-hardness member 771 adjacent to the glass member 702 deformed with a large radius of curvature when the electronic device is folded. A second low-hardness member (e.g., the second low-hardness member 772 of FIG. 5) that is deformed with a smaller radius of curvature than the first low-hardness member 771 may be omitted. The first low-hardness member 771 may be disposed between the glass member 702 and the high-hardness member 760. The external protection member 703 subjected to a lower tensile stress than the first low-hardness member 771 may make direct contact with the high-hardness member 760 without the separate second low-hardness member. The window member 710, from which the second low-hardness member is omitted, may be made slim and light.

According to an embodiment, as illustrated in FIGS. 8A and 8B, at least one of the first sub-openings 741, the second sub-openings 742, or the first main openings 743 may be formed in a groove shape facing toward the glass member 702 from a first surface 761 of the high-hardness member 760. According to another embodiment, as illustrated in FIGS. 9A and 9B, at least one of the first sub-openings 741, the second sub-openings 742, or the first main openings 743 may be formed in a groove shape facing toward the external protection member 703 from a second surface 762 of the high-hardness member 760.

According to an embodiment, as illustrated in FIGS. 8A and 9A, the first sub-openings 741, the second sub-openings 742, and the first main openings 743 may have the same depth. As illustrated in FIGS. 8A and 9A, the third filling members 753 filling the first main openings 743 may have the same depth as the first filling members 751 and the second filling members 752.

According to another embodiment, as illustrated in FIGS. 8B and 9B, the first main openings 743 may have a depth greater than the depths of the first sub-openings 741 and the second sub-openings 742. As illustrated in FIGS. 8B and 9B, the third filling members 753 filling the first main openings 743 may a thickness different from the thicknesses of the first filling members 751 and the second filling members 752. For example, the thickness t2 of the third filling members 753 disposed in the first main deformation region 723 may be greater than the thickness t1 of at least one of the first filling members 751 disposed in the first sub-deformation region 721 or the second filling members 752 disposed in the second sub-deformation region 722.

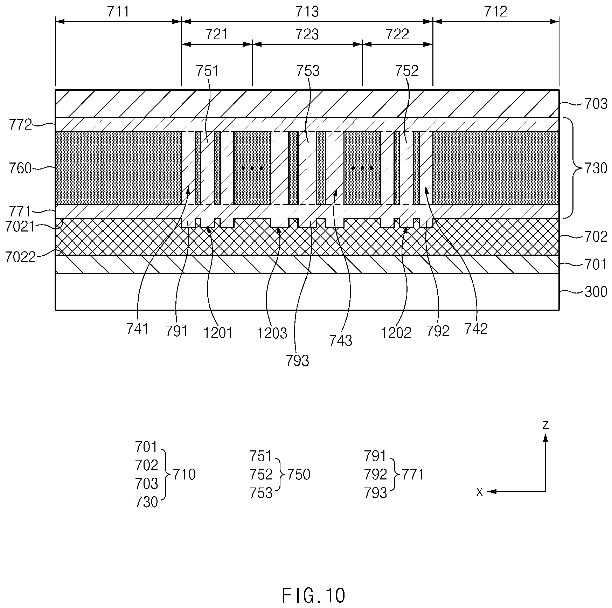

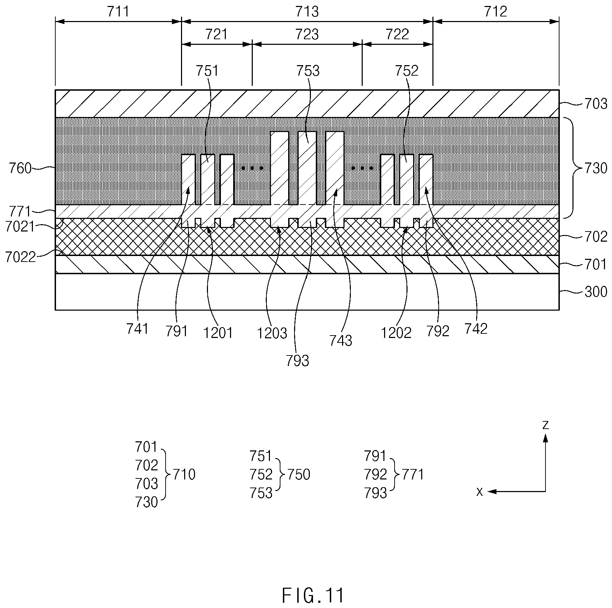

FIG. 10 is a view illustrating one example of a partial region of a foldable electronic device including a glass member having a concave-convex shape according to various embodiments, and FIG. 11 is a view illustrating another example of the partial region of the foldable electronic device including the glass member having the concave-convex shape according to various embodiments.

Referring to FIGS. 10 and 11, the window member 710 of the electronic device according to various embodiments may include the glass member 702 having a concave-convex surface.

The thickness of at least a portion of the glass member 702 may be greater than the thickness of at least a portion of the cushion member 701. In the first non-folding region 711 and the second non-folding region 712, the thickness of the glass member 702 may be greater than the thickness of the cushion member 701. In the folding region 713, the minimum thickness of the glass member 702 may be less than or greater than the thickness of the cushion member 701. In the folding region 713, the maximum thickness of the glass member 702 may be greater than the thickness of the cushion member 701. Due to the increase in the thickness of the glass member 702, the window member 710 may enhance impact resistance performance.

The glass member 702 may have a flat surface in the first non-folding region 711 and the second non-folding region 712. The glass member 702 may have a concave-convex surface in the folding region 713. The concave-convex surface of the glass member 702 may make contact with the first low-hardness member 771.

The glass member 702 having the concave-convex surface in the folding region 713 may include first recessed regions 1201, second recessed regions 1202, and third recessed regions 1203.

The first recessed regions 1201, the second recessed regions 1202, and the third recessed regions 1203 may be concavely recessed from a first surface 7021 of the glass member 702 that makes contact with the first low-hardness member 771 toward a second surface 7022 of the glass member 702. The first surface 7021 of the glass member 702 may face in a first direction (e.g., the direction toward the +Z-axis), and the second surface 7022 of the glass member 702 may face in a second direction (e.g., the direction toward the -Z-axis) that is opposite to the first direction. The depth of at least one of the first recessed regions 1201, the second recessed regions 1202, or the third recessed regions 1203 may be less than the maximum thickness of the glass member 702. The depth of at least one of the first recessed regions 1201, the second recessed regions 1202, or the third recessed regions 1203 may be less than the depth of at least one of the first sub-openings 741, the second sub-openings 742, or the first main openings 743.

The first recessed regions 1201 may correspond to the first openings 741 of the first sub-deformation region 721 in a one-to-one manner. The second recessed regions 1202 may correspond to the second openings 742 of the second sub-deformation region 722 in a one-to-one manner. The third recessed regions 1203 may correspond to the third openings 743 of the main deformation region 723 in a one-to-one manner. For example, the first recessed regions 1201 and the first sub-openings 741 may have the same width. The second recessed regions 1202 and the second sub-openings 742 may have the same width. The third recessed regions 1203 and the first main openings 743 may have the same width.

The first recessed regions 1202, the second recessed regions 1202, and the third recessed regions 1203 may be filled with the first low-hardness member 771. First filling regions 791 of the first low-hardness member 771 may be formed in the first recessed regions 1201. The first filling regions 791 formed in the first recessed regions 1201 may overlap the first filling members 751 filling the first sub-openings 741. Second filling regions 792 of the first low-hardness member 771 may be formed in the second recessed regions 1202. The second filling regions 792 formed in the second recessed regions 1202 may overlap the second filling members 752 filling the second sub-openings 742. Third filling regions 793 of the first low-hardness member 771 may be formed in the third recessed regions 1203. The third filling regions 793 formed in the third recessed regions 1203 may overlap the third filling members 753 filling the first main openings 743.

According to various embodiments, the depth of the first main openings 743 may be the same as, or different from, the depth of at least one of the first sub-openings 741 or the second sub-openings 742. In the embodiment illustrated in FIG. 10, the depth of the first main openings 743 may be the same as the depths of the first sub-openings 741 and the second sub-openings 742. The thickness of the third filling members 753 filling the first main openings 743 may be the same as the thickness of the first filling members 751 filling the first sub-openings 741 and the thickness of the second filling members 752 filling the second sub-openings 742. In the embodiment illustrated in FIG. 11, the depth of the first main openings 743 may be greater than the depths of the first sub-openings 741 and the second sub-openings 742. The thickness of the third filling members 753 filling the first main openings 743 may be greater than the thickness of the first filling members 751 filling the first sub-openings 741 and the thickness of the second filling members 752 filling the second sub-openings 742.

According to various embodiments, the embodiment illustrated in FIG. 10 may be applied to in-folding and out-folding electronic devices, and the embodiment illustrated in FIG. 11 may be applied to an in-folding electronic device.

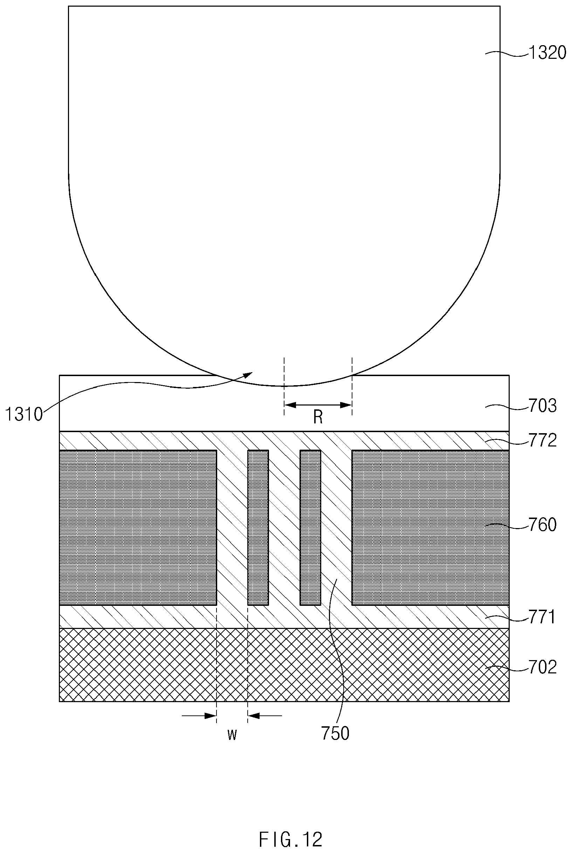

FIG. 12 is a view illustrating an electronic device including a window member and a stylus pen according to various embodiments. In FIG. 12, at least some components of the window member may be substantially the same as the components of FIG. 5. The same components may be assigned with the same reference numerals, and repetitive descriptions may be omitted.

Referring to FIG. 12, the electronic device according to various embodiments may receive various inputs from a user using the stylus pen 1320 connected with the electronic device through wireless communication. The stylus pen 1320 may include a pen tip 1310 that is a part capable of making contact with the electronic device. The pen tip 1310 may protrude from one end of the stylus pen 1320. The width w of the filling members 750 may be less than the radius R of the pen tip 13 10.The width w of at least one of first filling members (e.g., the first filling members 751 of FIG. 5), second filling members (e.g., the second filling members 752 of FIG. 5), or third filling members (e.g., the third filling members 753 of FIG. 5) may be less than the radius R of the pen tip 1310. For example, the filling members 750 may have a width w of 350 µm or less to prevent damage to a folding portion due to deformation when the stylus pen 1320 is used. Accordingly, when the stylus pen 1320 is used, the glass member 702 may be prevented from being deformed by the pressure exerted by the pen tip 1310, and the occurrence of a tensile force in the glass member 702 may be prevented.

According to various embodiments, the window member of the foldable electronic device may include the high-hardness member 760 and may secure rigidity. Accordingly, the foldable electronic device may be prevented from being damaged by the pressure generated when the stylus pen 1320 is used.

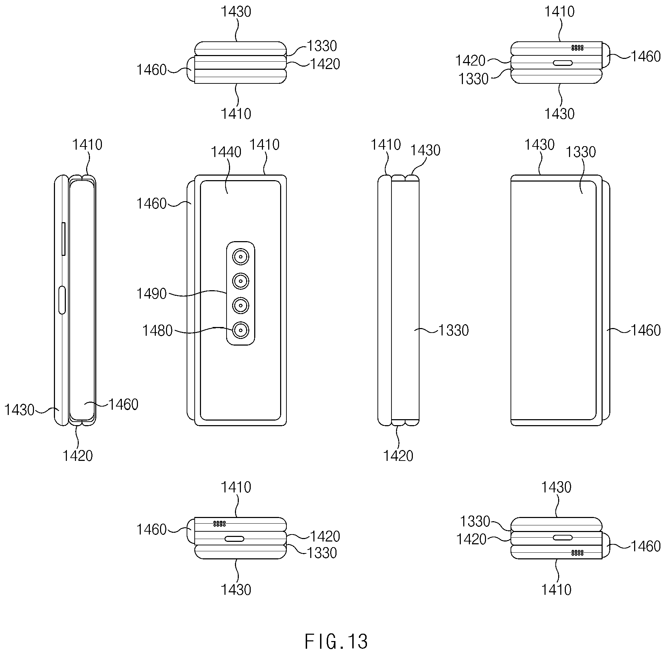

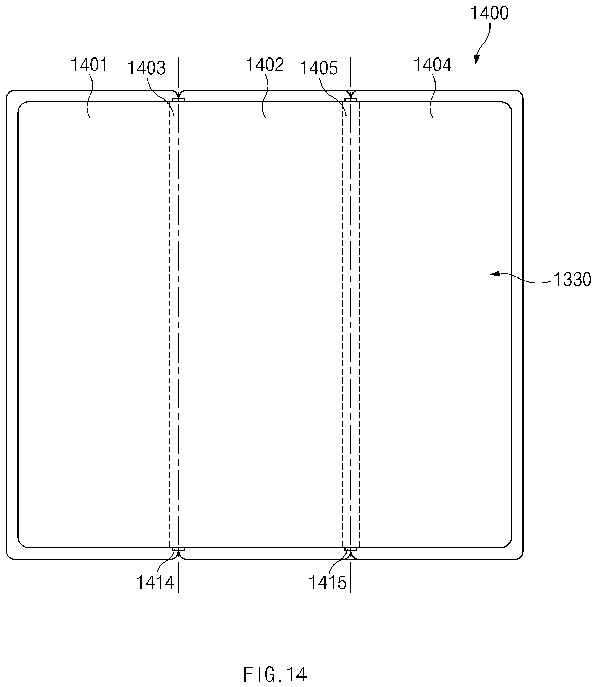

FIG. 13 is a view illustrating a folded state of a multi-foldable electronic device according to various embodiments, and FIG. 14 is a view illustrating a flat state of the multi-foldable electronic device according to various embodiments.

Referring to FIGS. 13 and 14, the multi-foldable electronic device according to various embodiments may include three or more housings. For example, the multi-foldable electronic device may include a first housing 1410, a second housing 1420, and a third housing 1430. A first hinge structure 1414 may be formed between the first housing 1410 and the second housing 1420, and a second hinge structure 1415 may be formed between the second housing 1420 and the third housing 1430.

According to various embodiments, a plurality of housings (e.g., three or more housings) may be configured to be alternately folded relative to each other in opposite directions. For example, the first hinge structure 1414 may be folded in an in-folding manner (e.g., a manner in which parts of a display device 160 are folded to face each other), and the second hinge structure 1415 may be folded in an out-folding manner (e.g., a manner in which back covers are folded to face each other). Accordingly, when both the first hinge structure 1414 and the second hinge structure 1415 are completely folded, at least a portion of a flexible display 1330 may be exposed to the outside.

According to various embodiments, a hinge cover 1460 may be disposed between the first housing 1410 and the second housing 1420 and may be configured to hide internal components. According to various embodiments of the disclosure, the hinge cover 1460 may be hidden by a portion of the first housing 1410 and a portion of the second housing 1420, or may be exposed to the outside, depending on a state (a flat state, an intermediate state, or a folded state) of the electronic device 1400.

According to various embodiments, at least one camera 1480 exposed through a specified rear region 1490 of a back cover 1440 may include one or more lenses, an image sensor, and/or an image signal processor.

According to various embodiments, when the electronic device 1400 is in an unfolded state (e.g., FIG. 2), the first housing 1410, the second housing 1420, and the third housing 1430 may be disposed to face the same direction while forming an angle of substantially 180 degrees. A surface of a first region 1401, a surface of a second region 1402, and a surface of a fourth region 1404 of the display 1330 may face the same direction (e.g., the front direction of the electronic device) while forming an angle of 180 degrees. A third region 1403 corresponding to the first hinge structure 1414 and a fifth region 1505 corresponding to the second hinge structure 1415 may form the same plane as the first region 1401, the second region 1402, and the fourth region 1404.

According to various embodiments, when the electronic device 1400 is in a folded state (e.g., FIG. 2), the first housing 1410 and the second housing 1420 may face each other. In addition, when the electronic device 1400 is in the folded state, the second housing 1420 and the third housing 1430 may face each other. The surface of the first region 1401 and the surface of the second region 1402 of the display 1330 may face each other while forming a narrow angle (e.g., an angle between 0 degrees and 10 degrees). At least a portion of the third region 1403 and at least a portion of the fifth region 1405 may be curved with a certain curvature.

According to various embodiments, a window member (e.g., the window member 710 of FIG. 5) including a high-hardness member formed in a lattice structure through a plurality of openings may be applied to the multi-foldable electronic device.

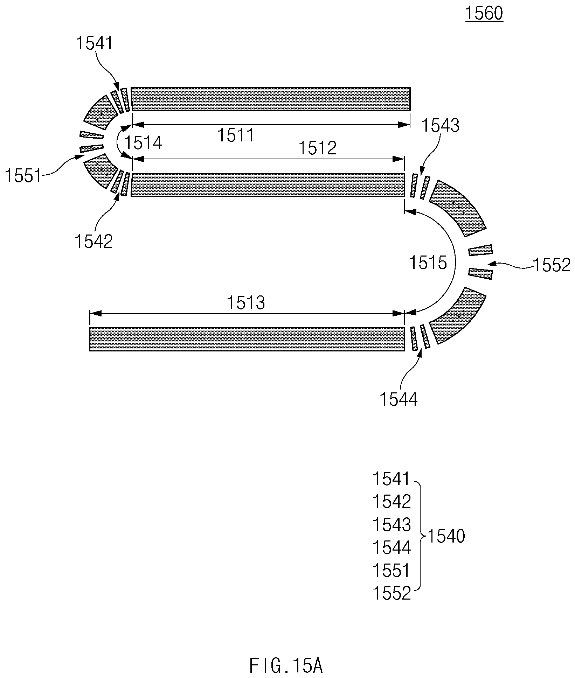

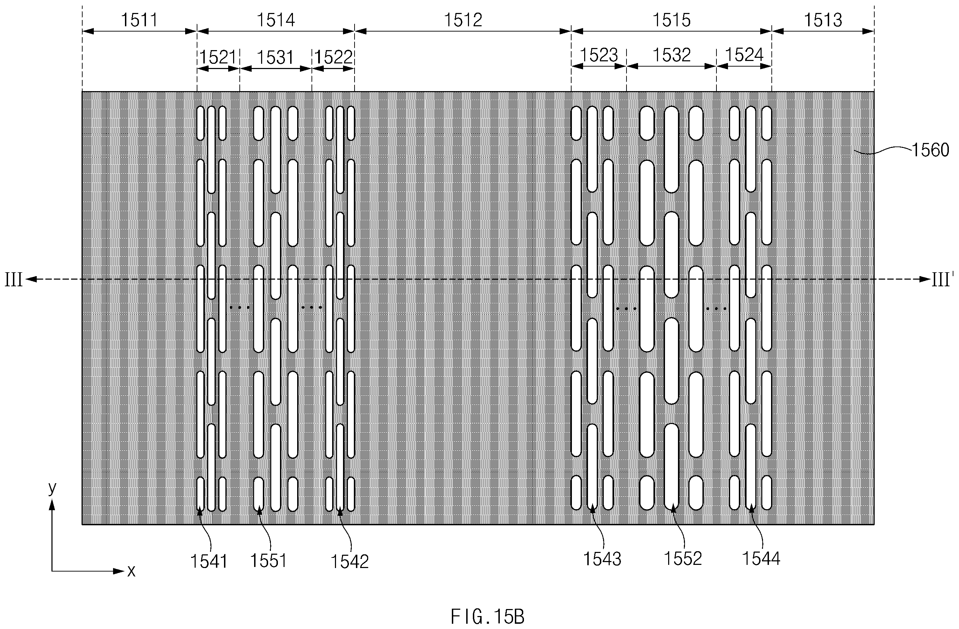

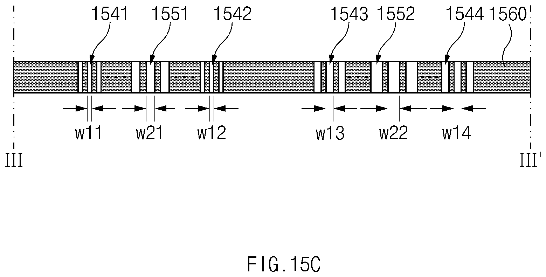

FIGS. 15A to 15C are views illustrating the high-hardness member included in the window member of the multi-foldable electronic device according to various embodiments. Although only the high-hardness member is illustrated in FIGS. 15A to 15C, it will be clearly understood by those skilled in the art that the high-hardness member illustrated in FIGS. 15A to 15C is able to be applied to the window member including at least one of the glass member 702, the first low-hardness member 771, the second low-hardness member 772, the filling members 750, or the external protection member 703 illustrated in FIG. 5.

Referring to FIGS. 15A to 15C, both an in-folding manner and an out-folding manner may be applied to the multi-foldable electronic device. The multi-foldable electronic device may include first to third non-folding regions 1511, 1512, and 1513, a first folding region 1514 (or, a first deformation region), and a second folding region 1515 (or, a second deformation region).

The first non-folding region 1511 may face a first region (e.g., the first region 1401 of FIG. 14) of a display (e.g., the display 1330 of FIG. 14) and a first housing (e.g., the first housing 1410 of FIG. 13). The second non-folding region 1512 may face a second region (e.g., the second region 1402 of FIG. 14) of the display (e.g., the display 1330 of FIG. 14) and a second housing (e.g., the second housing 1420 of FIG. 13). The third non-folding region 1513 may face a fourth region (e.g., the fourth region 1404 of FIG. 14) of the display (e.g., the display 1330 of FIG. 14) and a third housing (e.g., the third housing 1430 of FIG. 13). The first to third non-folding regions 1511, 1512, and 1513 may be flat regions in an unfolded state and a folded state of the multi-foldable electronic device.

The first folding region 1514 may face a third region (e.g., the third region 1403 of FIG. 14) of the display (e.g., the display 1330 of FIG. 14) and a first hinge structure (e.g., the first hinge structure 1414 of FIG. 14). The first folding region 1514 may include a first sub-deformation region 1521, a second sub-deformation region 1522, and a first main deformation region 1531. The first sub-deformation region 1521 may be disposed adjacent to the first non-folding region 1511, and the second sub-deformation region 1522 may be disposed adjacent to the second non-folding region 1512. The first main deformation region 1531 may be disposed between the first sub-deformation region 1521 and the second sub-deformation region 1522. In a folded state of the electronic device, the first main deformation region 1531 may have higher strain than the first sub-deformation region 1521 and the second sub-deformation region 1522.

The second folding region 1515 may face a fifth region (e.g., the fifth region 1405 of FIG. 14) of the display (e.g., the display 1330 of FIG. 14) and a second hinge structure (e.g., the second hinge structure 1415 of FIG. 14). The second folding region 1515 may include a third sub-deformation region 1523, a fourth sub-deformation region 1524, and a second main deformation region 1532. The third sub-deformation region 1523 may be disposed adjacent to the second non-folding region 1512, and the fourth sub-deformation region 1524 may be disposed adjacent to the third non-folding region 1513. The second main deformation region 1532 may be disposed between the third sub-deformation region 1523 and the fourth sub-deformation region 1524. In a folded state of the electronic device, the second main deformation region 1532 may have higher strain than the third sub-deformation region 1523 and the fourth sub-deformation region 1524.

The first folding region 1514 and the second folding region 1515 may be foldable deformation regions that are flat in an unfolded state of the multi-foldable electronic device and are curved in a folded state of the multi-foldable electronic device.

According to various embodiments, the high-hardness member 1560 of the window member of the multi-foldable electronic device may include the plurality of openings 1540 disposed in the first folding region 1514 and the second folding region 1515. The plurality of openings 1540 may be filled with filling members (e.g., the filling members 750 of FIG. 5). The filling members 750 may minimize stress caused by folding and may minimize damage caused by impact.

In the first folding region 1514, the high-hardness member 1560 may include first sub-openings 1541 disposed in the first sub-deformation region 1521, second sub-openings 1542 disposed in the second sub-deformation region 1522, and first main openings 1551 disposed in the first main deformation region 1531. The width w21 of the first main openings 1551 may be greater than at least one of the width w11 of the first sub-openings 1541 or the width w12 of the second sub-openings 1542. The filling members (e.g., the filling members 750 of FIG. 5) that fill the first main openings 1551 may have a greater width than the filling members that fill at least one of the first sub-openings 1541 or the second sub-openings 1542.

In the second folding region 1515, the high-hardness member 1552 may include third sub-openings 1543 disposed in the third sub-deformation region 1523, fourth sub-openings 1544 disposed in the fourth sub-deformation region 1524, and second main openings 1552 disposed in the second main deformation region 1532. The width w22 of the second main openings 1552 may be greater than at least one of the width w13 of the third sub-openings 1543 or the width w14 of the fourth sub-openings 1544. The filling members (e.g., the filling members 750 of FIG. 8) that fill the second main openings 1552 may have a greater width than the filling members that fill at least one of the third sub-openings 1543 or the fourth sub-openings 1544.

According to various embodiments, the first folding region 1514 and the second folding region 1515 may be identically folded in an in-folding manner or an out-folding manner. In this case, the width w22 of the second main openings 1552 may be the same as the width w21 of the first main openings 1551. At least one of the width w13 of the third sub-openings 1543 or the width w14 of the fourth sub-openings 1544 may be the same as at least one of the width w11 of the first sub-openings 1541 or the width w12 of the second sub-openings 1542.

According to various embodiments, the first folding region 1514 and the second folding region 1515 may be folded in different manners. For example, the first folding region 1514 may be folded in an in-folding manner, and the second folding region 1515 may be folded in an out-folding manner. The second folding region 1515 to which the out-folding manner is applied may have higher strain than the first folding region 1514 to which the in-folding manner is applied. Accordingly, the widths of the plurality of openings disposed in the second folding region 1515 may be greater than the widths of the plurality of openings disposed in the first folding region 1514. For example, the width w22 of the second main openings 1552 may be greater than the width w21 of the first main openings 1551. At least one of the width w13 of the third sub-openings 1543 or the width w14 of the fourth sub-openings 1544 may be greater than at least one of the width w11 of the first sub-openings 1541 or the width w12 of the second sub-openings 1542.

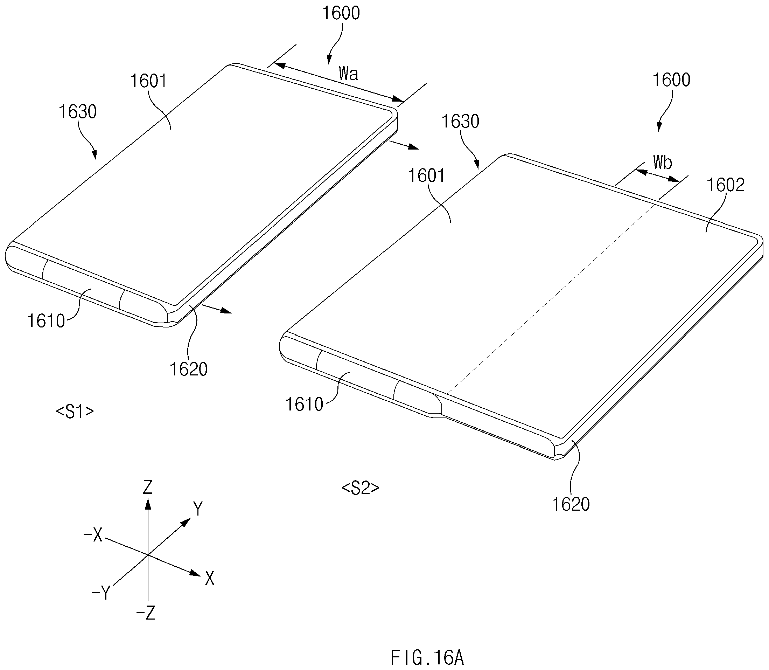

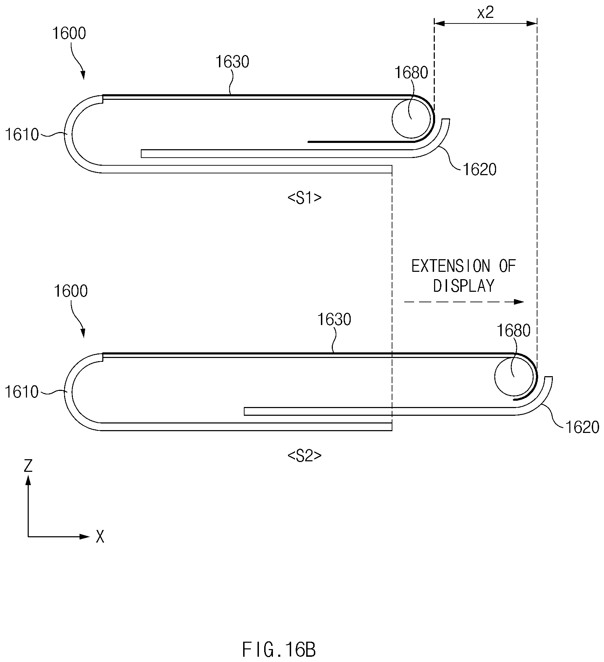

FIGS. 16A and 16B are views illustrating one example of the external appearance of a slidable electronic device according to various embodiments.

Referring to FIGS. 16A and 16B, the electronic device 1600 according to an embodiment may include a display 1630 (e.g., a flexible display, at least a portion of which has flexibility), a first housing 1610, and a second housing 1620. For example, the first housing 1610 may serve as a fixed cover to which one side of the display 1630 is fixed. The second housing 1620 may be moved relative to the first housing 1610 in a first direction (e.g., the X-axis direction) or a second direction (e.g., the -X-axis direction opposite to the first direction). When the first housing 1610 and the second housing 1620 overlap each other by a first width Wa with respect to the Z-axis as in a closed state S 1, a first display region 1601 having a first size (or, a first area) may be disposed to face in the upward direction (e.g., the Z-axis direction). Alternatively, in the closed state S 1, the display 1630 may include the first display region 1601 having the first size that is visually exposed to the outside. The first housing 1610 may be disposed to surround edges of the first display region 1601 (e.g., based on the illustrated drawings, at least a portion of the first display region 1601 that faces in the second direction (e.g., the -X-axis direction), at least a portion of the first display region 1601 that faces in a third direction (e.g., the Y-axis direction), at least a portion of the first display region 1601 that faces in a fourth direction (e.g., the -Y-axis direction), and at least a portion of the first display region 1601 that faces in a fifth direction (e.g., the -Z-axis direction, or the direction opposite to the Z-axis direction)). The display 1630 may include the first display region 1601 and a second display region 1602 extending in the first direction with respect to the first display region 1601. In the closed state S1, at least a portion of the second display region 1602 extending from the first display region 1601 may be wound (or, rolled) or spread out inside at least one of the first housing 1610 or the second housing 1620. In this state, the surface of the first display region 1601 where pixels emit light may face in the front direction (e.g., the Z-axis direction), and at least a portion of the upper surface of the second display region 1602 where pixels are disposed may face in the rear direction (e.g., the -Z-axis direction). A portion of the second display region 1602 may be bent.

According to an embodiment, when the second housing 1620 is moved relative to the first housing 1610 in the first direction (e.g., the X-axis direction), the exposed region of the display 1630 may be extended. For example, when the first housing 1610 and the second housing 1620 overlap each other by a second width Wb (e.g., a size smaller than the first width Wa) as in an open state S2 (e.g., a state in which the second housing 1620 is slid to extend the region of the display 1630), the display 1630 may include the first display region 1601 having the first size and the second display region 1602 having a second size that are exposed to the outside (or, that face in the upward direction (e.g., the Z-axis direction)). In the open state S2, the first size of the first display region 1601 may be the same as the second size of the second display region 1602. Alternatively, the first size may be larger than the second size. According to various embodiments, the second size may vary depending on the distance (e.g., x2) by which the second housing 1620 is slid or moved.

According to an embodiment, in the closed state S1, the display 1630 may maintain a state in which a portion is wound, and in the open state S2, the display 1630 may have a state in which at least part of the wound portion is unwound. The second housing 1620 may at least partially surround at least a portion of the second display region 1602 that faces in the first direction (e.g., the X-axis direction), at least a portion of the second display region 1602 that faces in the third direction (e.g., the Y-axis direction), at least a portion of the second display region 1602 that faces in the fourth direction (e.g., the -Y-axis direction), and at least a portion of the second display region 1602 that faces in the fifth direction (e.g., the -Z-axis direction, or the direction opposite to the Z-axis direction). According to various embodiments, at least a portion of the second housing 1620 may be connected with the inside of the first housing 1610, and the second housing 1620 may be slid along the inside surface of the first housing 1610 in one of the first direction (e.g., the X-axis direction) and the second direction (e.g., the -X-axis direction). The first housing 1610 and the second housing 1620 may surround the periphery of the display 1630 while the first housing 1610 and the second housing 1620 are being slid. Various electronic components associated with driving the display 1630, electronic components associated with various user functions supported by the electronic device 1600, or a battery may be disposed inside the first housing 1610 and the second housing 1620.

According to an embodiment, when a signal is generated through an input device included in the electronic device 1600, the electronic device 1600 may be switched from the closed state S 1 to the open state S2 or from the open state S2 to the closed state S1 by a driving device (e.g., an actuator 1680 or a motor) connected with the display 1630. According to another embodiment, the electronic device 1600 may include a sliding structure based on a resilient structure associated with the display 1630. For example, when the display 1630 is moved by a set distance by an external force, the electronic device 1600 may be switched from the closed state S1 to the open state S2 or from the open state S2 to the closed state S1 by the resilient structure without any further external force.

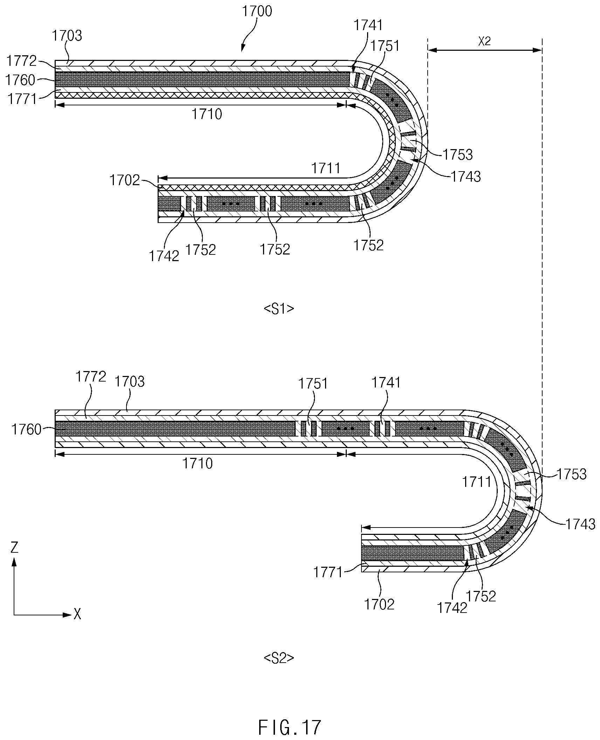

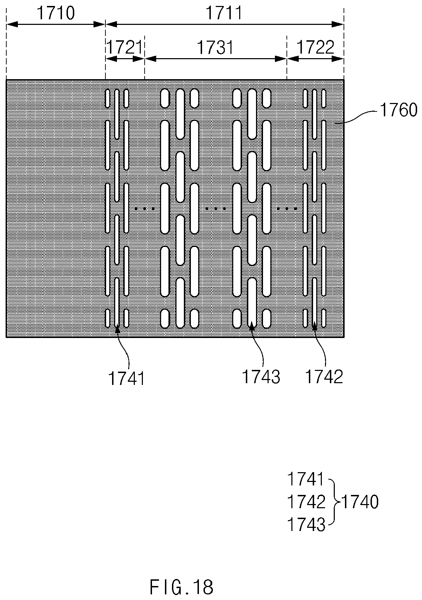

FIG. 17 is a view illustrating a window member applied to the slidable electronic device according to various embodiments, and FIG. 18 is a view illustrating a portion of a high-hardness member included in the window member illustrated in FIG. 17.

Referring to FIGS. 17 and 18, the window member 1700 applied to the slidable electronic device 1600 may include a non-sliding region 1710 and a sliding region 1711 (or, a deformation region).

The non-sliding region 1710 may face a first region (e.g., the first display region 1601 of FIG. 16A) of a display (e.g., the display 1630 of FIG. 16A) and a first housing (e.g., the first housing 1610 of FIG. 16A). The non-sliding region 1710 may be flat in the open state and the closed state of the slidable electronic device 1600.

The sliding region 1711 may face a second region (e.g., the second display region 1602 of FIG. 16A) of the display (e.g., the display 1630 of FIG. 16A) and a second housing (e.g., the first housing 1620 of FIG. 16A). One portion of the sliding region 1711 may be flat in the open state and the closed state of the slidable electronic device 1600, and the remaining portion of the sliding region 1711 may be in a rolled state in the open state and the closed state of the slidable electronic device 1600.

The sliding region 1711 may include a first sub-deformation region 1721, a second sub-deformation region 1722, and a first main deformation region 1731. The first sub-deformation region 1721 may be disposed adjacent to the non-sliding region 1710, and the first main deformation region 1731 may be disposed between the first sub-deformation region 1721 and the second sub-deformation region 1722.

At least a portion of the sliding region 1711 may be formed to be a curved surface having a certain curvature. The first sub-deformation region 1721, the second sub-deformation region 1722, and the first main deformation region 1731 may be curved with different radii of curvature in a sliding operation of the electronic device. For example, the first main deformation region 1731 may be curved with a larger radius of curvature than the first sub-deformation region 1721 and the second sub-deformation region 1722.

According to various embodiments, the high-hardness member 1760 of the window member 1700 applied to the slidable electronic device may include a plurality of openings 1740 disposed in the sliding region 1711.

The high-hardness member 1760 may include first sub-openings 1741 disposed in the first sub-deformation region 1721, second sub-openings 1742 disposed in the second sub-deformation region 1722, and first main openings 1743 disposed in the first main deformation region 1731. The width of the first main openings 1743 may be greater than the width of at least one of the first sub-openings 1741 or the second sub-openings 1742. The width of third filling members 1753 filling the first main openings 1743 may be greater than the width of at least one of first filling members 1751 filling the first sub-openings 1741 or second filling members 1752 filling the second sub-openings 1742. The first to third filling members 1751, 1752, and 1753 may minimize stress caused by sliding and may minimize damage caused by impact.

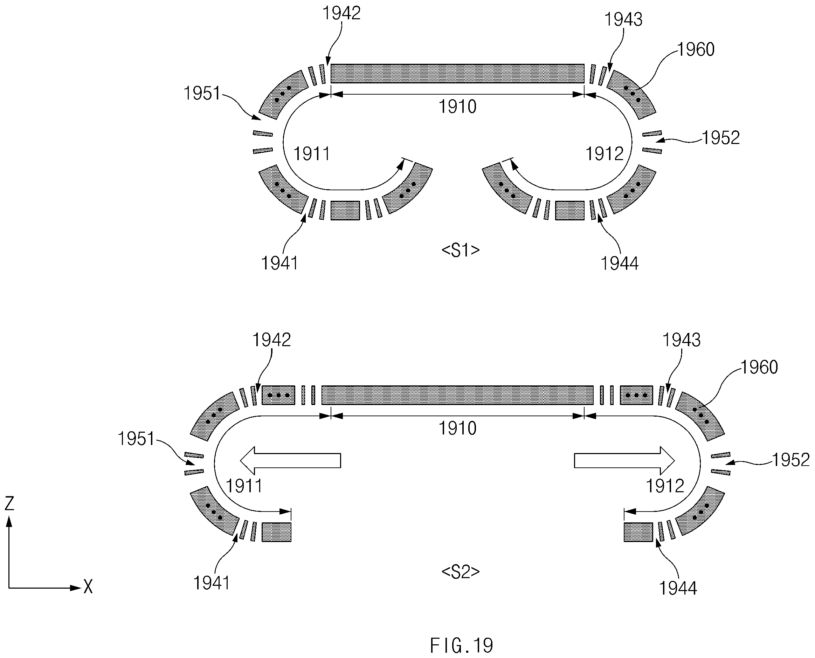

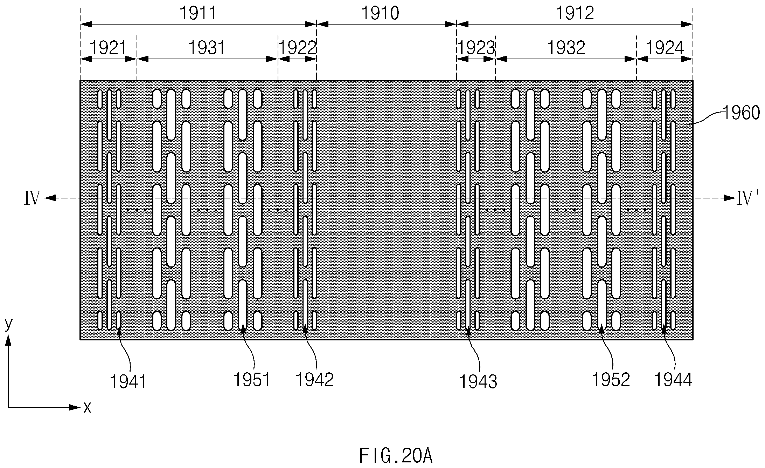

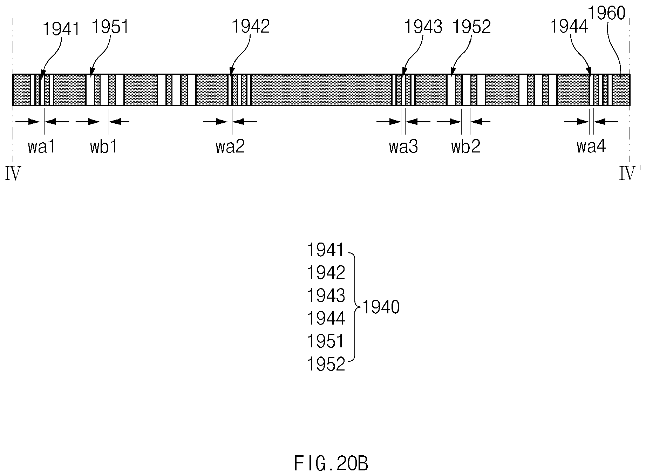

FIG. 19 is a view illustrating a high-hardness member of a window member applied to a rollable electronic device according to various embodiments. FIGS. 20A and 20B are views specifically illustrating a portion of the high-hardness member illustrated in FIG. 19. Although only the high-hardness member is illustrated in FIGS. 19, 20A, and 20B, it will be clearly understood by those skilled in the art that the high-hardness member 1760 illustrated in FIGS. 19, 20A, and 20B is able to be applied to the window member including at least one of the glass member 1702, the first low-hardness member 1771, the second low-hardness member 1772, the filling members 1751, 1752, and 1753, or the external protection member 1703 illustrated in FIG. 17. Furthermore, at least some components of the high-hardness member 1760 illustrated in FIGS. 19, 20A, and 20B may be substantially the same as the components of FIGS. 17 and 18. The same components may be assigned with the same reference numerals, and repetitive descriptions may be omitted.

Referring to FIGS. 19, 20A, and 20B, the rollable electronic device may include a non-rolling region 1910, a first rolling region 1911 (or, a first deformation region), and a second rolling region 1912 (or, a second deformation region).

The non-rolling region 1910 may be disposed between the first rolling region 1911 and the second rolling region 1912. The first rolling region 1911 may be disposed in one direction (e.g., one of the +X direction and the -X direction) with respect to the non-rolling region 1910 so as to be adjacent to one side of the non-rolling region 1910. The second rolling region 1912 may be disposed in an opposite direction (e.g., the other one of the +X direction and the -X direction) with respect to the non-rolling region 1910 so as to be adjacent to an opposite side of the non-rolling region 1910.

According to various embodiments, the high-hardness member 1960 applied to the window member of the rollable electronic device may include a plurality of openings 1940 disposed in the first rolling region 1911 and the second rolling region 1912. The plurality of openings 1940 may be filled with filling members (e.g., the filling members 750 of FIG. 5). The filling members may minimize stress caused by rolling and may minimize damage caused by impact.

In the first rolling region 1911, the high-hardness member 1960 may include first sub-openings 1941 disposed in a first sub-deformation region 1921, second sub-openings 1942 disposed in a second sub-deformation region 1922, and first main openings 1951 disposed in a first main deformation region 1931. The width wb1 of the first main openings 1951 may be greater than at least one of the width wa1 of the first sub-openings 1941 or the width wa2 of the second sub-openings 1942. The filling members (e.g., the filling members 750 of FIG. 5) that fill the first main openings 1951 may have a greater width than the filling members that fill at least one of the first sub-openings 1941 or the second sub-openings 1942.

In the second rolling region 1912, the high-hardness member 1960 may include third sub-openings 1943 disposed in a third sub-deformation region 1923, fourth sub-openings 1944 disposed in a fourth sub-deformation region 1924, and second main openings 1952 disposed in a second main deformation region 1932. The width wb2 of the second main openings 1952 may be greater than at least one of the width wb3 of the third sub-openings 1943 or the width wb4 of the fourth sub-openings 1944. The filling members (e.g., the filling members 750 of FIG. 5) that fill the second main openings 1952 may have a greater width than the filling members that fill at least one of the third sub-openings 1943 or the fourth sub-openings 1944.

The width wb2 of the second main openings 1952 may be the same as the width wb1 of the first main openings 1951. At least one of the width wa3 of the third sub-openings 1943 or the width wa4 of the fourth sub-openings 1944 may be the same as at least one of the width wa1 of the first sub-openings 1941 or the width w12 of the second sub-openings 1942. For example, the width wa3 of the third sub-openings 1943 and the width wa4 of the fourth sub-openings 1944 may be the same as the width wa1 of the first sub-openings 1741 and the width w12 of the second sub-openings 1942, respectively.

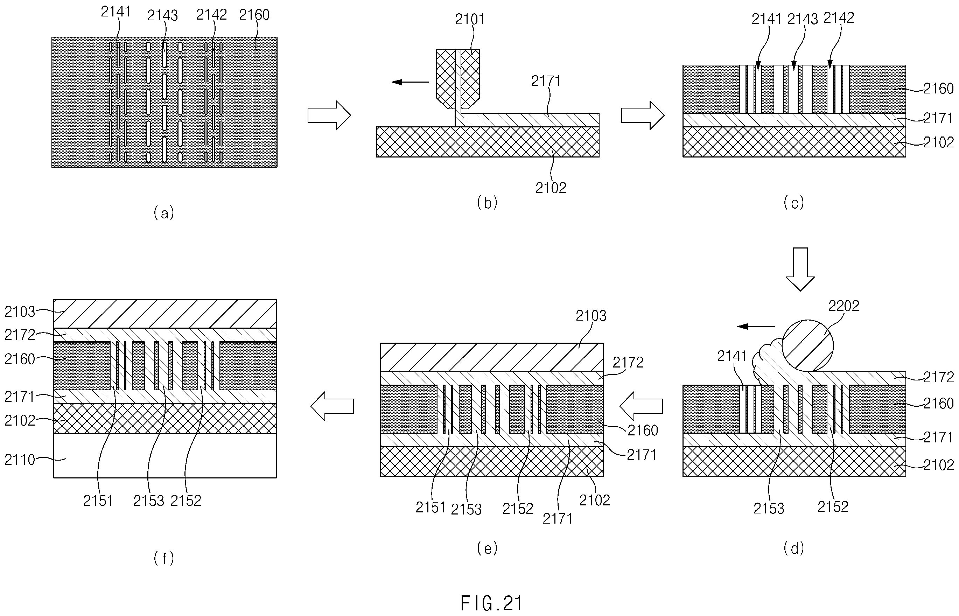

FIG. 21 is a view illustrating one example of a method of manufacturing a window member applied to electronic devices with form factors (e.g., single foldable, multi-foldable, rollable, or slidable) according to various embodiments.

Referring to FIG. 21 (a), a high-hardness member 2160 including first sub-openings 2141, second sub-openings 2142, and first main openings 2143 may be provided. The first sub-openings 2141, the second sub-openings 2142, and the first main openings 2143 may be formed through the high-hardness member 2160 using a laser cutting machine. For example, a femtosecond laser cutting machine may be used as the laser cutting machine. The first main openings 2143 may have a greater width than at least one of the first sub-openings 2141 or the second sub-openings 2142.

Referring to FIG. 21 (b), a first low-hardness member 2171 may be entirely applied to a thin glass member 2102. For example, the first low-hardness member 2171 may be formed on the flat glass member 2102 through a coating process using a slot die coater 2101.

Referring to FIG. 21 (c), the high-hardness member 2160 including the first sub-openings 2141, the second sub-openings 2142, and the first main openings 2143 may be laminated on the first low-hardness member 2171.

Referring to FIG. 21 (d), a second low-hardness member 2172 and first to third filling members 2151, 2152, and 2153 may be formed on the laminated high-hardness member 2160. The second low-hardness member 2172 and the filling members 2151, 2152, and 2153 may be formed through a coating process using a bar coater. At least one of the first to third filling members 2151, 2152, and 2153 may be integrated with the second low-hardness member 2172. The second low-hardness member 2172 may be applied to the high-hardness member 2160. The first filling members 2151 may fill the first sub-openings 2141. The second filling members 2152 may fill the second sub-openings 2142. The third filling members 2153 may fill the first main openings 2143.

Referring to FIG. 21 (e), an external protection member 2103 may be formed on the second low-hardness member 2172, and the window member may be completed accordingly. The external protection member 2103 may be laminated on the second low-hardness member. The window member may include the glass member 2102, the first low-hardness member 2171, the high-hardness member 2160, the first to third filling members 2151, 2152, and 2153, the second low-hardness member 2172, and the external protection member 2103.

Referring to FIG. 21 (f), the completed window member may be disposed on a display module 2110. The window member may be laminated on the display module 2110.

An electronic device according to embodiments of the disclosure may include a deformable display 300 and a window member 710 that is disposed on the display and that includes at least one deformation region 713 at least partially deformed depending on the deformable display. The deformation region 713 may include at least one main deformation region 723 and at least one sub-deformation region 7121 and 722. The window member 710 may include a first hardness member 706 including at least one of a plurality of sub-openings 741 and 742 disposed in the sub-deformation region 7121 and 722 or a plurality of main openings 743 disposed in the main deformation region 723, a filling member 750 that fills at least one of the plurality of sub-openings or the plurality of main openings, and a second hardness member 770 that is disposed on at least one of a first surface or a second surface of the first hardness member and that has a lower hardness than the first hardness member. At least one of the plurality of main openings 743 may have a greater width than at least one of the plurality of sub-openings 741 and 742.

According to various embodiments, the main deformation region may correspond to a partial region of the display curved with a larger radius of curvature than the sub-deformation region.

According to various embodiments, at least a portion of the window member may be deformed to be folded in a form of at least one of out-folding or in-folding depending on the display. In the window member deformed in the out-folding form, the filling member may have an inclined surface in an inverted tapered shape having a gradually decreasing width from the deformation region toward the display. In the window member deformed in the in-folding form, the filling member may have an inclined surface in a normal tapered shape having a gradually increasing width from the deformation region toward the display.

According to various embodiments, at least one of the main openings or the sub-openings may be formed in a hole shape formed through the first low-hardness member.

According to various embodiments, the window member may further include a glass member disposed between the first hardness member and the display and an external protection member disposed on the first hardness member.

According to various embodiments, at least a portion of the window member may be deformed to be folded in an out-folding form depending on the display, and the second hardness member may be disposed between the external protection member and the first hardness member so as to be disposed on the first hardness member.

According to various embodiments, the main openings and the sub-openings may be formed in a groove shape toward the glass member from the first surface of the first hardness member that faces toward the external protection member, and the main openings disposed in the main deformation region may have a greater depth than the sub-openings disposed in the sub-deformation region.

According to various embodiments, at least a portion of the window member may be deformed to be folded in an in-folding form depending on the display, and the second hardness member may be disposed between the glass member and the first hardness member so as to be disposed under the first hardness member.

According to various embodiments, the main openings and the sub-openings may be formed in a groove shape toward the external protection member from the second surface of the first hardness member that faces toward the glass member, and the main openings disposed in the main deformation region may have a greater depth than the sub-openings disposed in the sub-deformation region.

According to various embodiments, a contact surface of at least a partial region of the glass member that makes contact with the second hardness member may be formed in a concave-convex form.

According to various embodiments, the glass member may include at least one main recessed region that overlaps the main openings and at least one sub-recessed region that overlaps the sub-openings.

According to various embodiments, the second hardness member may be disposed in the main recessed region and the sub-recessed region.

According to various embodiments, the electronic device may further include a cushion member disposed between the glass member and the display, and a maximum thickness of the glass member may be greater than a thickness of the cushion member.

According to various embodiments, at least one of the main openings or the sub-openings may have a width less than a radius of a pen tip of a stylus pen that operates in conjunction with the electronic device.

According to various embodiments, the first hardness member may have the same refractive index as at least one of the second hardness member or the filling member.

According to various embodiments, a density of the plurality of main openings disposed in the main deformation region may be higher than a density of the plurality of sub-openings disposed in the sub-deformation region.

According to various embodiments, the electronic device may further include a first hinge structure that faces a first deformation region included in the at least one deformation region, a first housing connected to the first hinge structure, and a second housing connected with the first hinge structure so as to be foldable relative to the first housing. The window member may include a first folding region in which the main openings and the sub-openings are disposed and that is the first deformation region, a first non-folding region that faces the first housing, and a second non-folding region that faces the second housing.

According to various embodiments, the electronic device may further include a second hinge structure that faces a second deformation region included in the at least one deformation region and that is connected with the second housing and a third housing connected with the second hinge structure so as to be foldable relative to the second housing. The window member may include a second folding region in which second main openings and second sub-openings are disposed and that is the second deformation region, a first non-folding region that faces the first housing, and a second non-folding region that faces the second housing.

According to various embodiments, the electronic device may further include a first housing and a second housing that faces the at least one deformation region and that is fastened with the first housing to perform a sliding operation. The window member may include a sliding region that faces the second housing and that is the deformation region and a non-sliding region that faces the first housing.

According to various embodiments, the display may be included in a rollable electronic device, and the window member may include a rolling region that faces a portion of the display and that is the deformation region and a non-rolling region disposed on at least one side of the rolling region.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

In the disclosure, the expression "configured to" may be interchangeably used with, for example, "suitable for", "capable of", "modified to", "made to", "able to", or "designed to" according to a situation in a hardware or software way. In some situations, the expression "a device configured to" may refer, for example to the device being "capable of' operating together with another device or other components. CPU, for example, a "processor configured to (or set to) perform A, B, and C" may refer, for example, to a dedicated processor (e.g., an embedded processor) for performing a corresponding operation or a generic-purpose processor (e.g., a central processing unit (CPU) or an application processor) which may perform corresponding operations by executing one or more programs which are stored in a memory device.

The term "module" used in the disclosure may include a unit configured in a hardware, software, or firmware way, or any combination thereof, and for example, may be used interchangeably with the terms such as logic, a logic block, a component, or a circuit. The "module" may be an integral component, or a minimum unit or a part which performs one or more functions. The "module" may be implemented mechanically or electronically, and for example, may include an application-specific integrated circuit (ASIC) chip, field-programmable gate arrays (FPGAs), or a programmable logic device that is known or to be developed in the future, which performs some operations.

At least some of the devices (e.g., modules or functions) or methods (e.g., operations) according to various embodiments of the disclosure may be implemented by an instruction stored in a computer-readable storage medium (e.g., the memory 730), for example, in the form of a program module. When the instruction is executed by the processor (for example, the processor), the at least one processor may perform a function corresponding to the instruction. The computer-readable recording medium may include a hard disk, a floppy disk, a magnetic medium (e.g., a magnetic tape), an optical recording medium (e.g., a compact disc read only memory (CD-ROM) or a digital versatile disc (DVD)), a magneto-optical medium (e.g., a floptical disk), and an embedded memory. The instruction may include a code made by a compiler or a code that may be executed by an interpreter.

According to various embodiments, each component (e.g., a module or a program) of the above-described components may include a single entity or multiple entities and some of multiple entities may be separately disposed on the other components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a deformable display; and
a window member disposed on the display, the window member including at least one deformation region at least partially deformed depending on the deformable display,
wherein the deformation region includes at least one main deformation region and at least one sub-deformation region,
wherein the window member includes:
a first hardness member including at least one of a plurality of sub-openings disposed in the sub-deformation region or a plurality of main openings disposed in the main deformation region;
a filling member configured to fill at least one of the plurality of sub-openings or the plurality of main openings; and
a second hardness member disposed on at least one of a first surface or a second surface of the first hardness member, the second hardness member having a lower hardness than the first hardness member, and
wherein at least one of the plurality of main openings has a greater width than at least one of the plurality of sub-openings.

2. The electronic device of claim 1, wherein the main deformation region corresponds to a partial region of the display curved with a larger radius of curvature than the sub-deformation region.

3. The electronic device of claim 1, wherein at least a portion of the window member is deformed to be folded in a form of at least one of out-folding or in-folding depending on the display,
wherein in the window member deformed in the out-folding form, the filling member has an inclined surface in an inverted tapered shape having a gradually decreasing width from the deformation region toward display, and
wherein in the window member deformed in the in-folding form, the filling member has an inclined surface in a normal tapered shape having a gradually increasing width from the deformation region toward display.

4. The electronic device of claim 1, wherein at least one of the main openings or the sub-openings are formed in a hole shape formed through the first low-hardness member.

5. The electronic device of claim 1, wherein the window member further includes:
a glass member disposed between the first hardness member and the display; and
an external protection member disposed on the first hardness member.

6. The electronic device of claim 5, wherein at least a portion of the window member is deformed to be folded in an out-folding form depending on the display, and
wherein the second hardness member is disposed between the external protection member and the first hardness member so as to be disposed on the first hardness member.

7. The electronic device of claim 6, wherein the main openings and the sub-openings are formed in a groove shape toward the glass member from first surface of first hardness member configured to face toward the external protection member, and
wherein main openings disposed in the main deformation region have a greater depth than sub-openings disposed in the sub-deformation region.

8. The electronic device of claim 5, wherein at least a portion of the window member is deformed to be folded in an in-folding form depending on the display, and
wherein the second hardness member is disposed between the glass member and the first hardness member so as to be disposed under the first hardness member.

9. The electronic device of claim 8, wherein the main openings and the sub-openings are formed in a groove shape toward the external protection member from second surface of first hardness member configured to face toward the glass member, and
wherein main openings disposed in the main deformation region have a greater depth than sub-openings disposed in the sub-deformation region.

10. The electronic device of claim 5, wherein a contact surface of at least a partial region of the glass member configured to make contact with the second hardness member is formed in a concave-convex form.

11. The electronic device of claim 10, wherein the glass member includes:
at least one main recessed region configured to overlap the main openings; and
at least one sub-recessed region configured to overlap the sub-openings, and
wherein the second hardness member is disposed in the main recessed region and the sub-recessed region.

12. The electronic device of claim 10, further comprising:
a cushion member disposed between the glass member and the display,
wherein a maximum thickness of the glass member is greater than a thickness of the cushion member.

13. The electronic device of claim 1, wherein at least one of the main openings or the sub-openings have a width less than a radius of a pen tip of a stylus pen configured to operate in conjunction with the electronic device.

14. The electronic device of claim 1, wherein the first hardness member has the same refractive index as at least one of the second hardness member or the filling member.

15. The electronic device of claim 1, wherein a density of plurality of main openings disposed in the main deformation region is higher than a density of plurality of sub-openings disposed in the sub-deformation region.
